# EUROPÄISCHE PATENTSCHRIFT

(11) **EP 2 413 697 B1**
(45) Veröffentlichungstag und Bekanntmachung des Hinweises auf die Patenterteilung: **08.11.2017**
(21) Anmeldenummer: 10710048.9
(22) Anmeldetag: 25.03.2010
(51) Int. Cl.: A01N 47/12, A01N 43/44, A01P 1/00, A01N 25/22, A01N 59/12, C08K 5/3412, C08K 5/205, C09D 5/14, C08L 67/06

(54) **STABILISIERUNG IOD-HALTIGER VERBINDUNGEN**
STABILISATION OF COMPOUNDS CONTAINING IODINE
STABILISATION DE COMPOSÉS CONTENANT DE L'IODE

(30) Priorität: 01.04.2009 EP 09157103
(43) Veröffentlichungstag der Anmeldung: 08.02.2012
(73) Patentinhaber: LANXESS Deutschland GmbH, 50569 Köln (DE)
(72) Erfinder: BÖTTCHER, Andreas, 50859 Köln (DE); KOOP, Bernd, 50668 Köln (DE); SPETMANN, Peter, 51377 Leverkusen (DE)
(86) Internationale Anmeldenummer: PCT/EP2010/053872
(87) Internationale Veröffentlichungsnummer: WO 2010/112387

(56) Entgegenhaltungen:
- EP-A1- 1 382 248
- WO-A1-98/22543
- DE-A1- 19 627 909
- DATABASE WPI Week 200618 Thomson Scientific, London, GB; AN 2006-168282 XP002551748 & JP 2006 045686 A (KOMATSU SEIREN KK) 16. Februar 2006 (2006-02-16) in der Anmeldung erwähnt

## Beschreibung

Die Erfindung betrifft die Verwendung ausgewählter Aziridinverbindungen zur Stabilisierung Iod-haltiger Verbindungen, insbesondere Biozide, Zusammensetzungen solcher Kombinationen und Bindemittelformulierungen enthaltend Iod-haltige Verbindungen, insbesondere Biozide und ausgewählter Aziridinverbindungen.

### Hintergrund und Stand der Technik

Iod-haltige Biozide werden zum Schutz technischer Materialien z.B. Anstrichmittel vor dem Befall, der Zersetzung, Zerstörung und optischen Veränderung durch Pilze, Bakterien und Algen, bevorzugt durch Pilze, eingesetzt. Darüber hinaus werden Iod-haltige Biozide, auch in Kombination mit Bioziden anderer Wirkstoffklassen, als Komponenten biozid wirksamer Materialschutzmittel wie Holzschutzmittel eingesetzt. Neben Iodalkinylverbindungen werden hier auch Wirkstoffe eingesetzt, bei denen ein oder mehrere Iodatome an Doppelbindungssysteme, aber auch an einfach gebundene Kohlenstoffatome gebunden sind.

Vielen Iod-haltigen Bioziden ist gemeinsam, dass sie unter Lichteinwirkung selbst in Substanz oder als Komponente eines technischen Materials (z.B. Anstrichmittel) zu einer Gelbfärbung unter Wirkstoffabbau führen. Dieses Merkmal erschwert bzw. verhindert den Einsatz von Iod-haltigen Bioziden in entsprechend sensiblen Materialien, so z.B. in hellen bzw. weißen Anstrichmitteln.

Viele Iod-haltige Biozide, insbesondere Iodalkinylverbindungen, werden durch Metallverbindungen besonders rasch zerstört. Diese Tatsache verhindert den Einsatz von z.B. Iodalkinylverbindungen in lösungsmittelbasierten Anstrichmitteln, wie z.B. Farben, Lacken und Lasuren, oder bioziden Schutzmitteln, wie z.B. Holzschutzgrundierungen, Holzschutzimprägnierungen und Holzschutzlasuren, da diese Alkyd basierten Beschichtungs- und Schutzsysteme regelmäßig mit Metallverbindungen ausgerüstet sind. Hier fungieren Übergangsmetallverbindungen, z.B. Cobalt-, Blei-, Mangan- und Vanadiumoctoate, als Trockner (Sikkative) des Alkydharz-haltigen Bindemittelsystems. Darüber hinaus werden auch Übergangsmetallverbindungen als Pigmente eingesetzt, die teilweise mit den Sikkativen vergleichbare destruktive Eigenschaften aufweisen.

Neben den Trocknern gibt es in den oben genannten Lösungsmittel basierten Systemen eine Reihe weiterer Bestandteile, die in unterschiedlicher Intensität zu einem Abbau Iod-haltiger Biozide führen. Während bei den üblicherweise verwendeten Lösungsmitteln der destabilisierende Effekt noch relativ schwach ausgebildet ist, zeigen die anderen üblichen Komponenten einer Farbformulierung, wie z.B. Prozessadditive, Weichmacher, Farbpigmente, Antiabsetzmittel, Thixotropiermittel, Korrosionsinhibitoren, Hautverhinderer und Binder mehr oder weniger stark ausgeprägte destabilisierende Effekte.

Neben den oben beschriebenen Lösungsmittel basierten Systemen ist auch der Einsatz von Iod-haltigen Bioziden in bestimmten Wasser basierten technischen Materialien (z.B. Anstrichmittel und Schutzmittel wie Holzschutzlasuren und Grundierungen) problematisch. Basiert z.B. die Filmbildung und Filmhärtung eines Wasser basierten Anstrichmittels auf der oxidativen Vernetzung wasserlöslicher bzw. emulgierter Alkydharze, so kommen auch in diesen Systemen Übergangsmetallverbindungen als Sikkative zum Einsatz, womit eine Zerstörung der enthaltenen Iod-haltigen Biozide einhergeht.

Es sind bereits Methoden bekannt, den Abbau von Halogenpropargylverbindungen in Übergangsmetall-haltigen, Lösemittel basierten Alkydharzfarben zu verhindern. So wird beispielsweise in der WO 98/22543 der Zusatz von Chelatisierungsreagenzien beschrieben.

Die Stabilisierung von Iod ist beispielsweise in JP-A-2006-45686 mittels sogenannter Cyclodextrine (CD) realisiert worden, deren Komplex zur besseren Fixierung an der Faser daran durch Polymerisation von Aziridinhaltigen-Monomeren verankert wird. Dabei handelt es sich bei der CD-Iod Paarung jedoch lediglich um einen Komplex, bei dem in dem Hohlraum des CDs das Iod bzw. der Iodophor geschützt liegt, ohne kovalent mit dem CD gebunden zu sein. Auch das Iodophor seinerseits ist ein Komplex bei dem Iod nicht mit dem Träger kovalent gebunden ist, zumal dies nur eine Form ist, aus der sich Iod zur angestrebten Wirkung wieder befreien muss.

Des Weiteren sind Übergangsmetall-haltige, Lösemittel basierte Alkydharzfarben bekannt, bei denen Halogenpropargylverbindungen durch organische Epoxide stabilisiert werden (vgl. WO 00/16628). Epoxide sind zu Stabilisierung von IPBC auch in JP-A-19-120515 bereits beschrieben.

Es sind auch bereits Verfahren beschrieben, den durch Licht induzierten Abbau von antifungischen Wirkstoffen, wie auch von Iodpropargylbutylcarbamat, durch Zusatz von Tetraalkylpiperidinverbindungen und/oder UV-Absorbern zu unterdrücken. (vgl. EP-A 0083308).

Gemäß WO 2007/028527 werden Iod-haltige Biozide mit 2-(2-Hydroxyphenyl)-benzotriazolen stabilisiert und in WO 2005/027635 erfolgt die Stabilisierung von IPBC mittels amphoteren Verbindungen.

Durch Zusatz von Epoxyverbindungen soll die Verfärbung von Iodalkinverbindungen, wie IPBC reduziert werden (vgl. US-A 4,276,211 und US-A 4,297,258).

Des weiteren sind noch synergistische Mischungen von Epoxiden mit UV Absorbern (vgl.WO 99/29176) und mit Benzyliden Campfer Derivaten (vgl. US-A 6,472,424) beschrieben, die ebenfalls eine reduzierte Gelbfärbung aufweisen.

Darüber hinaus wird in WO 2007/101549 die Stabilisierung Iod-haltiger Biozide durch Azolverbindungen beschrieben.

Die stabilisierende Wirkung der oben genannten Stabilisatoren ist jedoch nicht immer ausreichend und mit anwendungstechnischen Nachteilen behaftet. So werden insbesondere die Trockenzeiten der Farben deutlich verlängert, was in vielen Fällen für den Anwender nicht akzeptabel ist. Außerdem ist die Inhibierung der Verfärbung nicht immer ausreichend.

Aus der EP-B 1382248 ist bekannt, dass Iod-haltige Biozide in Gegenwart von Metallionen durch Chelatisierungsreagenzien stabilisiert werden können.

Die DE-A 19627909 beschreibt die Verwendung von Aziridinverbindungen zur Entfernung von Schwermetallionen aus Abwässern.

Überraschenderweise wurde nun gefunden, dass durch den Einsatz von Aziridinverbindungen der Formel (I) Iod-haltige Verbindungen, insbesondere Biozide, insbesondere in Lösungsmittel- und Wasser basierten Systemen sowohl vor chemischem als auch Licht induziertem Abbau geschützt werden und damit die beschriebenen Nachteile nicht-stabilisierter Iod-haltiger Verbindungen wie Farbveränderungen und Wirkstoff- bzw. Wirkungsverlust verhindert werden können. Darüber hinaus wurde gefunden, dass mit dem Einsatz von Aziridinverbindungen der Formel (I) zur Stabilisierung Iod-haltiger Biozide in den oben genannten Systemen anwendungstechnische Nachteile, wie beispielsweise eine Verlängerung der Trockenzeit eines Anstrichsystems, vermieden werden können.

Unter Iod-haltigen Verbindungen werden im Rahmen dieser Erfindung Iodpropinylcarbamate verstanden. Bevorzugt sind Jodpropinylcarbamate, 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat, 3-Iod-2-propinyl-cyclohexylcarbamat.

Die Erfindung betrifft daher die Verwendung von Aziridinverbindungen der Formel (I) zur Stabilisierung von Iod-haltigen Verbindungen, insbesondere Bioziden.

Die Iod-haltigen Verbindungen, insbesondere Biozide können einzeln oder in Mischungen zusammen mit mehreren Iod-haltigen Verbindungen, insbesondere Bioziden eingesetzt werden. Besonders bevorzugt ist IPBC.

Aziridine bzw. Aziridinverbindungen im Sinne der Erfindung sind Aziridinverbindungen der Formel (I) 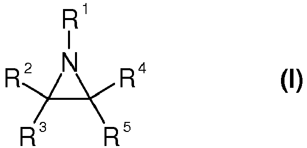 wobei
R¹ Wasserstoff, Alkyl oder Cycloalkyl, die jeweils unsubstituiert oder substituiert und/oder einfach- oder mehrfach ethylenisch ungesättigt sind, jeweils substituiertes oder unsubstituiertes Fullerenyl, Aryl, Alkoxy, Alkoxycarbonyl, Arylcarbonyl oder Alkanoyl bedeutet,
R², R³, R⁴ und R⁵ unabhängig voneinander die gleiche Bedeutung wie R¹ haben und zusätzlich unabhängig Halogen, Hydroxyl, Carboxyl, Alkylsulfonyl, Arylsulfonyl, Nitril, Isonitril bedeuten und
R² und R⁴ oder R³ und R⁵ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Als monofunktionelle Aziridine der Formel (I) kommen bspw. solche in Frage, worin R² und R⁴ oder R³ und R⁵ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Insbesondere sind dies solche der Formel (II) 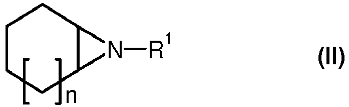 wobei der carbocyclische Ring unsubstituiert ist oder mit einem oder mehreren Substituenten ausgewählt aus der Reihe Halogen, Hydroxyl, Oxo, Carboxyl, Alkylsulfonyl, Arylsulfonyl, Nitril, Isonitril, Alkyl oder Cycloalkyl, die jeweils unsubstituiert oder substituiert und/oder einfach- oder mehrfach ethylenisch ungesättigt sind, substituiertes oder unsubstituiertes Fullerenyl, Aryl, Alkoxy, Alkoxycarbonyl oder Alkanoyl substituiert ist und
n für eine Zahl von 0 bis 6, bevorzugt von 0 bis 1 steht.

Ebenfalls sind solche monofunktionelle Aziridinverbindungen der Formel (I) bevorzugt, worin R¹ für einen Rest der Formel 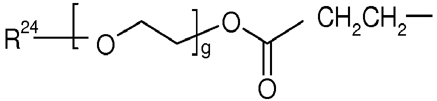 oder 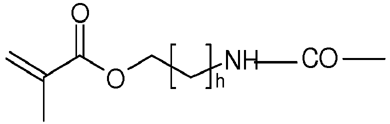 steht,
worin
R²⁴ für -H oder Alkyl, bevorzugt für -H, -CH₃, -C₂H₅, besonders bevorzugt für -CH₃, -C₂H₅ steht,
g eine Zahl von 1 bis 4, bevorzugt 1 bis 3, besonders bevorzugt 1 bis 2 ist,
h eine Zahl von 1 bis 11, bevorzugt 1 bis 5 und besonders bevorzugt 1 bis 3 ist
und die übrigen Reste, die obige Bedeutung haben.

Insbesondere sind solche Verbindungen der Formel (I) bevorzugt, die der Verbindung der Formel (III) oder (IV) entsprechen, 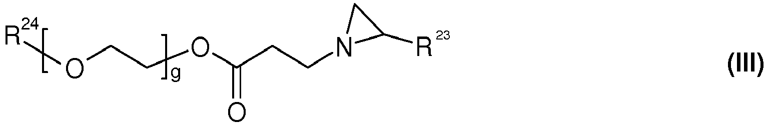 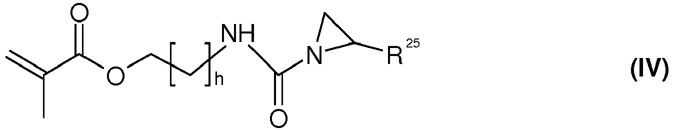 wobei
R²³ für -H oder Alkyl, bevorzugt für -H oder -CH₃, besonders bevorzugt für -CH₃ steht,
R²⁵ für -H oder Alkyl, bevorzugt für -H oder -CH₃, besonders bevorzugt für -CH₃ steht und die übrigen Reste die obige Bedeutung haben.

Besonders bevorzugt sind Aziridine der Formel (I), die zwei oder mehrere Aziridinfunktionen haben. Beispielsweise sind Verbindungen der Formel (V) zu nennen 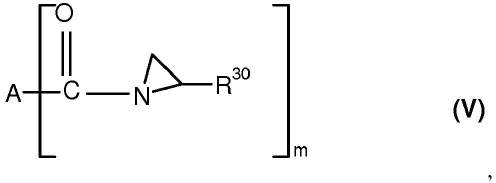 worin
- A: für einen m-valenten aliphatischen, cycloaliphatischen oder aromatischen Rest steht, der ggf. substituiert ist,
- m: für eine Zahl von 2 bis 5, insbesondere 2 bis 3 steht, und
- R³⁰: für jede m-Einheit jeweils unabhängig für Wasserstoff oder C₁-C₄-Alkyl, insbesondere CH₃ oder CH₂CH₃ steht.

Bei m = 2 steht A bevorzugt für C₂-C₁₀-Alkylen,
insbesondere für
- (CH₂)₆-, -C(CH₃)₂ CH₂ C(CH₃)₂ CH₂- oder
- C(CH₃)₂ CH₂ CH(CH₃) CH₂ - oder
für ein Phenylen, insbesondere für den bivalenten Rest der Formel

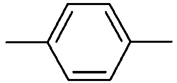

Bei m = 3 steht A bevorzugt für den trivalenten Rest der Formel

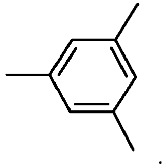

Bevorzugt sind solche Verbindungen der Formel (V), die den Formeln (Va) - (Vd) entsprechen.

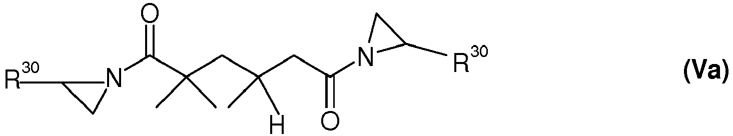

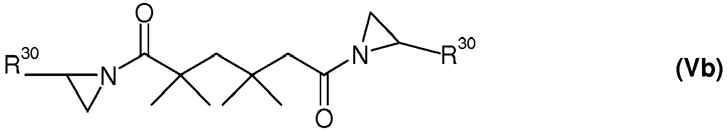

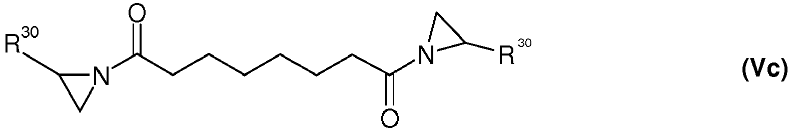

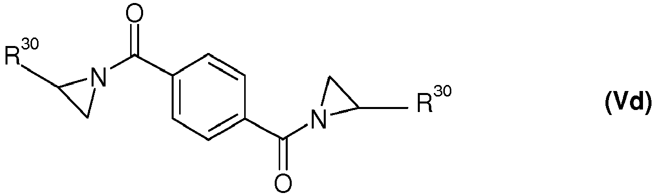

Ebenfalls bevorzugt sind als polyfunktionelle Aziridinverbindungen, Michael-Additionsprodukte von gegebenenfalls substituiertem Ethylenimin an Ester von mehrwertigen Alkoholen mit α,β-ungesättigten Carbonsäuren und den Additionsprodukten von gegebenenfalls substituiertem Ethylenimin an Polyisocyanate.

Geeignete Alkoholkomponenten sind beispw. Trimethylolpropan, Neopentylglykol, Glycerin, Pentaerythrit, 4,4'-Isopropylidendiphenol und 4,4'-Methylendiphenol. Als α,β-ungesättigte Carbonsäuren kommen bspw. Acryl- und Methacrylsäure, Crotonsäure und Zimtsäure in Frage.

Besonders bevorzugt enthält die erfindungsgemäße Zusammensetzung Acrylsäureester.

Die korrespondierenden mehrwertigen Alkohole der α,β-ungesättigten Carbonsäureester können ggf. Alkohole sein, die an ihren OH-Funktionen teilweise vollständig mit Alkylenoxiden einfach oder mehrfach verlängert sind. Hierbei kann es sich bspw. um die mit Alkylenoxiden einfach oder mehrfach verlängerten oben genannten Alkohole handeln. Diesbezüglich wird auch auf die US 4,605,698 verwiesen, dessen Offenbarung durch Bezugnahme in die vorliegende Erfindung eingeschlossen ist. Erfindungsgemäß besonders geeignete Alkylenoxide sind Ethylenoxid und Propylenoxid.

Beispiele für zur Reaktion mit gegebenenfalls substituiertem Ethylenimin geeigneten Polyisocyanaten sind die auf S. 4, Zeile 33 - 35 von WO2004/050617 genannten.

Beispiele für erfindungsgemäß geeignete Aziridine sind die auf S. 3, Zeile 29 - 34 von WO2004/050617 genannten.

Bevorzugt sind ebenfalls solche Aziridine wie sie beispielsweise in US 3,225,013 (Fram), US 4,490,505 (Pendergrass) und US 5,534,391 (Wang) beschrieben sind.

Ebenfalls bevorzugt sind solche Aziridine der Formel (I), die wenigstens drei Aziridingruppen besitzen, wie beispielsweise Trimethylolpropan-tris[3-(1-aziridinyl)propionat], Trimethylolpropan-tris[3-(2-methyl-1-aziridinyl)propionat], Trimethylolpropan-tris[2-aziridinylbutyrat], Tris(1-aziridinyl)phosphinoxid, Tris(2-methyl-1-aziridinyl)phosphinoxid, Pentaerythritol-tris-[3-(1-aziridinyl)propionat] und Pentaerythritol-tetrakis-[3-(1-aziridinyl)propionat].

Hiervon sind besonders Trimethylolpropan-tris[3-(1-aziridinyl)propionat], Trimethylolpropan-tris[3-(2-methyl-1-aziridinyl)propionat], Trimethylolpropan-tris [2-aziridinylbutyrat], Pentaerythritol-tris-[3-(1-aziridinyl)propionat] und Pentaerythritol-tetrakis-[3-(1-aziridinyl)propionat] bevorzugt.

Besonders sind Trimethylolpropan-tris[3-(1-aziridinyl)propionat], Trimethylolpropan-tris[3-(2-methyl-1-aziridinyl)propionat] und Pentaerythritol-tetrakis-[3-(1-aziridinyl)propionat] bevorzugt.

Ebenfalls bevorzugt sind polyfunktionelle Aziridine der Formel (VI) 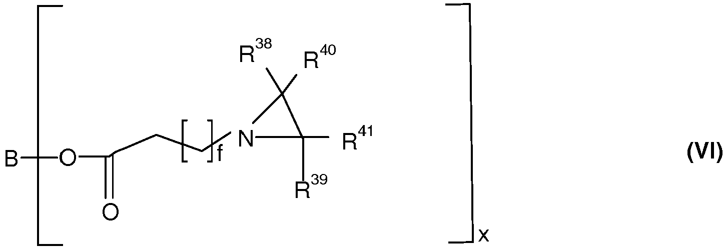 worin
B der Rest eines aliphatischen Polyols ist, das wenigstens x OH-Funktionen aufweist, wobei x OH-Funktionen durch den Rest der obigen Klammer substituiert sind,
f für eine Zahl von 0 bis 6, insbesondere von 1 bis 3 steht,
x eine Zahl größer oder gleich 2 ist, insbesondere für 2 bis 100.000 steht und
R³⁸ und R³⁹ oder R⁴⁰ und R⁴¹ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

Besonders bevorzugt ist B der Rest eines Polyvinylalkohols. Besonders bevorzugt sind solche Aziridine der Formel (VI), worin x für 3 oder 4 steht und B ein 3- oder 4-fach OH-funktionelles Polyol ist.

Besonders bevorzugt sind Aziridine der Formel (VI), die der Formel (VIa) - (VIc) entsprechen 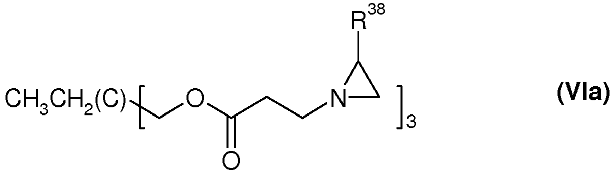 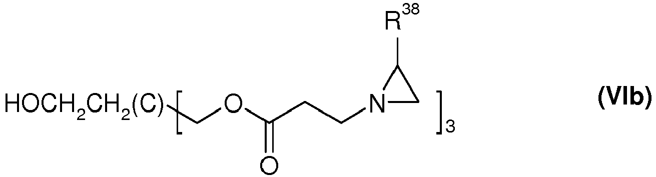 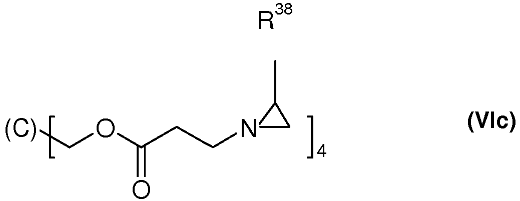 worin
R³⁸ für Wasserstoff oder CH₃ steht.

Besonders bevorzugt ist die auch als Crosslinker CX-100 von DSM bekannte Aziridinverbindung der Formel (VIa), mit R³⁸ = Methyl sowie auch das Produkt "Corial Härter AN" der BASF, das das Aziridin der Formel (VIa) mit R³⁸ = Wasserstoff enthält.

Die erfindungsgemäß einzusetzenden Aziridine der Formel (I) eignen sich bevorzugt zur Stabilisierung von Iod-haltigen Verbindungen, insbesondere Bioziden, in Bindemittelformulierungen bspw. in Alkydharz-basierten Systemen wie Anstrichmitteln, die Übergangsmetalltrockner enthalten. Bevorzugte Bindemittelformulierungen und Übergangsmetalltrockner werden weiter unten näher beschrieben.

Unter Stabilisierung wird im Rahmen dieser Anmeldung vorzugsweise die Stabilisierung von Iod-haltigen Verbindungen sowohl vor chemischem als auch durch Licht induziertem Abbau, insbesondere vor chemischem Abbau verstanden.

Insbesondere können die Aziridinverbindungen der Formel (I) dazu verwendet werden, den chemischen Abbau Iod-haltiger Verbindungen, insbesondere Biozide in Wirkstoffformulierungen, insbesondere Anstrichmitteln wie Farben, Lacke, Grundierungen, Imprägnierungen, Lasuren und anderen technischen Materialien zu unterdrücken oder zumindest zu verlangsamen. Die erfindungsgemäß zur Stabiliserung Iod-haltiger Verbindungen, insbesondere Bioziden, einsetzbaren Aziridinverbindungen weisen ganz besonders in Alkydharz-basierten Systemen wie Anstrichmitteln, die Übergangsmetalltrockner enthalten, eine gute stabilisierende Wirkung auf.

Bevorzugt wird die Stabilisierung dadurch realisiert, dass die Iod-haltigen Verbindungen, insbesondere Biozide und die Aziridinverbindung der Formel (I) gemeinsam in einer Mischung oder in einem Medium vorliegen.

Bevorzugt kommt die Aziridinverbindung in einer Zusammensetzung erfindungsgemäß zum Einsatz, enthaltend
a) wenigstens ein Iod-haltiges Biozid und
b) wenigstens eine Aziridinverbindung der Formel (I).

Die Zusammensetzung ist ebenfalls Gegenstand der vorliegenden Erfindung.

Im Hinblick auf die bevorzugten Iod-haltigen Verbindungen, insbesondere Biozide und die bevorzugten Aziridinverbindungen gelten die oben genannte Vorzugsformen auch für die bevorzugten erfindungsgemäßen Zusammensetzungen.

Bevorzugte Zusammensetzungen enthalten
a) IPBC und
b) wenigstens ein Aziridin der Formel (VI).

Die erfindungsgemäßen Zusammensetzungen enthalten im allgemeinen

0,01 - 70 Gew.-%, vorzugsweise 0,05 - 60 Gew.-%, besonders bevorzugt 0,1 - 50 Gew.-% weingstens eine Iod-haltige Verbindung, insbesondere Biozid und

0,001 - 50 Gew.-%, vorzugsweise 0,005 - 40 Gew.-%, besonders bevorzugt 0,01 - 30 Gew.-% wenigstens einer Aziridinverbindung der Formel (I).

Bevorzugt enthält die erfindungsgemäße Zusammensetzung die Iod-haltige Verbindung, insbesondere das Iod-haltige Biozid und die Aziridinverbindung der Formel (I) in Summe von 0,01 bis 99 Gew.%.

Bei der erfindungsgemäßen Verwendung werden im allgemeinen 1 bis 280 Gew.-% wenigstens einer Aziridinverbindung der Formel (I), bevorzugt 2 bis 225 Gew.-%, insbesondere 5 bis 110 Gew.%, bezogen auf das Iod-haltige Biozid zugesetzt.

Bevorzugt ist es, bezogen auf die Iod-haltige Verbindung 0,05 bis 5, vorzugsweise 0,1 bis 4, insbesondere 0,25 bis 2 Äquivalente der Aziridinfunktionen einzusetzen.

Die erfindungsgemäße Zusammensetzung kann in verschiedenen Formen, bspw. als Lösung, Dispersion, Feststoffmischung usw. vorliegen, vorzugsweise als Lösung oder Dispersion.

Bevorzugt sind solche Zusammensetzungen, die Wasser und/oder ein organisches Lösungsmittel enthalten. Im Falle der Benutzung von Wasser als Streckmittel können auch geeignete, d.h. mit Wasser unter Bildung einer Phase mischbare, organische Lösungsmittel als Hilfslösungsmittel verwendet werden.

Als organische Lösungsmittel kommen beispielsweise Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen (Testbenzin, Shellsol D60 der Fa. Shell Chemical), einwertige Alkohole wie bspw. Ethanol, Isopropanol und Butanol, mehrwertige Alkohole wie bspw. Glycerin, Pentaerythritol, Polyvinylalkohol (z.B. Mowiol® der Fa. Kuraray), Glykole wie bspw. Ethylenglykol und Propylenglykol, Oligoglykole und Polyglykole, Ether von Oligoglykolen wie bspw. Dipropylenglykol-Monomethylether (z.B. Dowanol® TPM der Fa. Dow), Ether und Ester von Alkoholen wie Texanol® (der Fa. Eastman), Ketone, wie Aceton, Methylethylketon, Methylisobutylketon oder Cyclohexanon, insbesondere stark polare aprotische Lösungsmittel, wie Dimethylformamid und Dimethylsulfoxid, sowie z.B. totalveretherte Glykole, Oligoglykole und Polyglykole wie bspw. Ethylenglykoldibutylether, veretherte Polyole und veresterte Polyole, Ester von ein- sowie mehrwertigen Carbonsäuren, z.B. Adipinsäurediisobutylester, Maleinsäurediisobutylester (z.B. Rhodiasolv DIB®) in Frage.

Die genannten organischen Lösungsmittel können aber auch vorzugsweise ohne oder zumindest mit wenig Wasser zum Einsatz kommen. Bevorzugt enthält die Zusammensetzung zusätzlich zu den Komponenten a) und b) ein Lösungsmittel, insbesondere ein Lösungsmittel, das zu mehr als 95Gew.-%, vorzugweise mehr als 98-Gew.-% aus wenigstens einem organischen Lösungsmittel besteht. Bevorzugt ist insbesondere ein polares aprotisches Lösungsmittel, wie Dimethylformamid und Dimethylsulfoxid, sowie z.B. totalveretherte Glykole, Oligoglykole und Polyglykole, veretherte Polyole und veresterte Polyole, Ester von ein- sowie mehrwertigen Carbonsäuren, z.B. Adipinsäuredüsobutylester, Maleinsäurediisobutylester (z.B. Rhodiasolv DIB®).

Weiterhin kann die erfindungsgemäße Zusammensetzung als weitere Inhaltsstoffe Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide sowie mineralische und vegetabile Öle enthalten. Zudem kann sie Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink sowie für Aziridinverbindungen bekannte Stabilisatoren, beispielsweise Tetramethylethylendiamin (TMEDA), Triethylendiamin und das aus WO2004/050617 bekannte 1,4-Diazabicyclo[2.2.2]octan (DABCO) enthalten.

Die Erfindung betrifft weiterhin ein Verfahren zur Herstellung der erfindungsgemäßen Zusammensetzung.

Die erfindungsgemäße Zusammensetzung kann beispielsweise durch Vermischen der Einzelkomponenten ggf. mit Streckmitteln, also flüssigen Lösungsmitteln und gegebenenfalls unter Verwendung weiterer Zusatzstoffe hergestellt werden.

Die Wirksamkeit und das Wirkungsspektrum der erfindungsgemäßen Zusammensetzungen bzw. der zum Einsatz kommenden Iod-haltigen Verbindung kann erhöht werden, wenn gegebenenfalls weitere antimikrobiell wirksame Verbindungen, Fungizide, Bakterizide, Herbizide, Insektizide oder andere Wirkstoffe zur Vergrößerung des Wirkungsspektrums oder Erzielung besonderer Effekte zugesetzt bzw. mit verwendet werden. Diese Mischungen können ein noch breiteres Wirkungsspektrum besitzen.

In vielen Fällen erhält man dabei synergistische Effekte, d.h. die Wirksamkeit der Mischung ist größer als die Wirksamkeit der Einzelkomponenten. Besonders günstige Mischungspartner sind z.B. die folgenden Verbindungen:
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar, 1-Imidazolyl-1-(4'-chlorophenoxy)-3,3-dimethylbutan-2-on sowie deren Metallsalze und Säureaddukte;
Pyridine und Pyrimidine wie:
   Ancymidol, Buthiobat, Fenarimol, Mepanipyrin, Nuarimol, Pyroxyfur, Triamirol;
   Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafin, Naftifin, Butenafin, 3-Chloro-7-(2-aza-2,7,7-trimethyl-oct-3-en-5-in);
Sulfenamide wie:
   Dichlofluanid, Tolylfluanid, Folpet, Fluorfolpet; Captan, Captofol;
Benzimidazole wie:
   Carbendazim, Benomyl, Fuberidazole, Thiabendazol oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
   2-Mercaptobenzothiazol;
Benzthiophendioxide wie:
   Benzo[b]thiophen-S,S-dioxid-carbonsäurecyclohexylamid;
Benzamide wie:
   2,6-Dichloro-N-(4-trifluoromethylbenzyl)-benzamid, Tecloftalam;
Borverbindungen wie:
   Borsäure, Borsäureester, Borax;
Formaldehyd und Formaldehydabspaltende Verbindungen wie:
   Benzylalkoholmono-(poly)-hemiformal, 1,3-Bis(hydroxymethyl)-5,5-dimethylimidazolidine-2,4-dione (DMDMH), Bisoxazolidine, n-Butanol-hemiformal, Cis 1-(3-Chlorallyl)-3,5,7-triaza-1-azoniaadamantane chlorid, 1-[1,3-Bis(hydroxymethyl-2,5-dioxoimidazolidin-4-yl]-1,3-bis(hydroxymethyl)urea, Dazomet, Dimethylolharnstoff, 4,4-Dimethyl-oxazolidine, Ethylenglycol-hemiformal, 7-Ethylbicyclooxazolidine, Hexa-hydro-S-triazine, Hexamethylentetramin, N-Hydroxymethyl-N'-methylthioharnstoff, Methylenbismorpholin, Natrium N-(Hydroxymethyl)glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD);
Isothiazolinone wie:
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Aldehyde wie:
   Zimtaldehyd, Formaldehyd, Glutardialdehyd, β-Bromzimtaldehyd, o-Phthaldialdehyd;
Thiocyanate wie:
   Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie:
   Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;
Pyridine wie:
   1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2);
Metallseifen wie:
   Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie:
   Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie:
   Oxide der Metalle Zinn, Kupfer und Zink wie z.B. Tributylzinnoxid, Cu₂O, CuO, ZnO;
Oxidationsmittel wie:
   Wasserstoffperoxid, Peressigsäure, Kalium-persulfat;
Dithiocarbamate wie:
   Cufraneb, Ferban, Kalium-N-hydroxymethyl-N'-methyl-dithiocarbamat, Na- oder K-dimethyldithiocarbamat, Macozeb, Maneb, Metam, Metiram, Thiram, Zineb, Ziram;
Nitrile wie:
   2,4,5,6-Tetrachlorisophthalodinitril, Dinatrium-cyano-dithioimidocarbamat;
Chinoline wie:
   8-Hydroxychinolin und deren Cu-Salze;
   sonstige Fungizide und Bakterizide wie:
      Bethoxazin, 5-Hydroxy-2(SH)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäurechlorid, Tris-N-(cyclohexyldiazeniumdioxy)-aluminium, N-(Cyclo-hexyldiazeniumdioxy)-tributyl-zinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
   Ag, Zn oder Cu-haltige Zeolithe allein oder eingeschlossen in polymere Werkstoffe.

Ganz besonders bevorzugt sind Mischungen mit
Azaconazol, Bromuconazol, Cyproconazol, Dichlobutrazol, Diniconazol, Diuron, Hexaconazol, Metaconazol, Penconazol, Propiconazol, Tebuconazol, Dichlofluanid, Tolylfluanid, Fluorfolpet, Methfuroxam, Carboxin, Benzo[b]thiophen-S,S-dioxid-carbonsäurecyclohexylamid, Fenpiclonil, 4-(2,2-Difluoro-1,3-benzodioxol-4-yl)-1H-pyrrol-3-carbonitril, Butenafin, Imazalil, N-Methyl-isothiazolin-3-on, 5-Chlor-N-methylisothiazolin-3-on, N-Octylisothiazolin-3-on, Dichlor-N-octylisothiazolinon, Mercaptobenzthiazol, Thiocyanatomethylthiobenzothiazol, Thiabendazol, Benzisothiazolinon, N-(2-Hydroxypropyl)-amino-methanol, Benzylalkohol-(hemi)-formal, N-Methylolchloracetamid, N-(2-Hydroxypropyl)-amin-methanol, Glutaraldehyd, Omadine, Zn-Omadine, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.

Desweiteren werden neben den oben genannten Fungiziden und Bakteriziden auch gut wirksame Mischungen mit anderen Wirkstoffen hergestellt:
Insektizide / Akarizide / Nematizide:
   Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
   Bacillus thuringiensis, Barthrin, 4-Bromo-2-(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
   Cadusafos, Carbaryl, Carbofuran, Carbophenothion, Carbosulfan, Cartap, Chinomethionat, Cloethocarb, Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamid, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
   Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialon, Diflubenzuron, Dimethoat, 3,5-Dimethylphenylmethylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
   Eflusilanate, Emamectin, Empenthrin, Endosulfan, EPN, Esfenvalerat, Ethiofencarb, Ethion, Ethofenprox, Etrimphos, Etoxazole, Etobenzanid,
   Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin, Flufenprox, Fluvalinate, Fonophos, Formethanate, Formothion, Fosmethilan, Fosthiazat, Fubfenprox, Furathiocarb,
   Halofenocid, HCH (CAS RN: 58-89-9), Heptenophos, Hexaflumuron, Hexythiazox, Hydramethylnon, Hydropren,
   Imidacloprid, Imiprothrin, Indoxycarb, Iprinomectin, Iprobenfos, Isazophos, Isoamidophos, Isofenphos, Isoprocarb, Isoprothiolane, Isoxathion, Ivermectin,
   Kadedrin,
   Lambda-Cyhalothrin, Lufenuron,
   Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
   Naled, NI 125, Nicotin, Nitenpyram, Noviflumuron,
   Omethoat, Oxamyl, Oxydemethon M, Oxydeprofos,
   Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
   Quinalphos,
   Resmethrin, Rotenon,
   Salithion, Sebufos, Silafluofen, Spinosad, Spirodiclofen, Spiromesifen, Sulfotep, Sulprofos,
   Tau-fluvalinat, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
   Vamidothion, Xylylcarb, Zetamethrin;
Molluscizide:
   Fentinacetat, Metaldehyd, Methiocarb, Niclosamid;
   Herbizide und Algizide:
      Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
      Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
      Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron, Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
      Eglinazin, Endothal, EPTC, Esprocarb, Ethalfluralin, Ethidimuron, Ethofumesat, Ethobenzanid, Ethoxyfen, Ethametsulfuron, Ethoxysulfuron,
      Fenoxaprop, Fenoxaprop-P, Fenuron, Flamprop, Flamprop-M, Flazasulfuron, Fluazifop, Fluazifop-P, Fuenachlor, Fluchloralin, Flufenacet, Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
      Glyphosate, Glufosinate-ammonium
      Haloxyfop, Hexazinon,
      Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
      Ketospiradox,
      Lactofen, Lenacil, Linuron,
      MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
      Naproanilid, Napropamid, Naptalam, Neburon, Nicosulfuron, Norflurazon, Natriumchlorat,
      Oxadiazon, Oxyfluorfen, Oxysulfuron, Orbencarb, Oryzalin, Oxadiargyl,
      Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
      Quinmerac, Quinocloamine, Quizalofop, Quizalofop-P, Quinchlorac,
      Rimsulfuron,
      Sethoxydim, Sifuron, Simazine, Simetryn, Sulfosulfuron, Sulfometuron, Sulfentrazone, Sulcotrione, Sulfosate,
      Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
      Vernolat.

Die Erfindung betrifft weiterhin eine Bindemittelformulierung, enthaltend
- wenigstens ein Bindemittel,
- wenigstens eine Iod-haltige Verbindung, insbesondere Biozid und
- wenigstens eine Aziridinverbindung der Formel (I).

Bevorzugt enthält die Bindemittelformulierung die Komponenten Iod-haltige Verbindung, insbesondere Biozid und Aziridinverbindung der Formel (I) in Form der erfindungsgemäßen Zusammensetzung. Als bevorzugte Bindemittel kommen oxidativ trocknende Bindemittel, vorzugsweise Alkydharz-basierende Bindemittel oder durch Koaleszenzmittel verfilmenden Bindemittel, insbesondere Latices in Frage.

Bei den Alkydharz-basierten Bindemittel kommen vorzugsweise Alkydharze inklusive ihrer modifizierten Alkydharze in Frage.

Bei den Alkydharzen handelt es sich im allgemeinen um Polykondensationsharze aus Polyolen und mehrwertigen Carbonsäuren bzw. deren Anhydriden und Fetten, Ölen oder freien natürlichen und/oder synthetischen Fettsäuren. Die Alkydharze können gegebenenfalls noch mit hydrophilen, insbesondere wasserlöslichen Gruppen chemisch modifiziert sein, um beispielsweise als emulgierbares bzw. als wasserlösliches Alkydharz einsetzbar zu sein.

Bevorzugt handelt es sich bei den genannten Polyolen um Glycerin, Pentaerythrit, Trimethylolethan, Trimethylolpropan sowie um verschiedene Diole wie Ethan-/Propandiol, Diethylenglycol und Neopentylglycol.

Bevorzugt handelt es sich bei den genannten mehrwertigen Carbonsäuren bzw. deren Anhydriden um Phthalsäure, Phthalsäureanhydrid, Maleinsäureanhydrid, Isophthalsäure, Terephthalsäure, Trimellitsäureanhydrid, Adipinsäure, Azelainsäure oder Sebacinsäure.

Bei den genannten Ölen oder Fettsäuren handelt es sich im allgemeinen um Leinöl, Oiticicaöl, Holzöl, Sojaöl, Sonnenblumenöl, Safloröl, Ricinenöl, Tallöl, Rizinusöl, Kokosöl, Erdnussöl, deren Fettsäuren sowie synthetischen Monocarbonsäuren.

Die Alkydharze können gegebenenfalls noch modifiziert werden bspw. mit Naturharzen, Phenolharzen, Acrylharzen, Styrol, Epoxidharzen, Siliconharzen, Isocyanaten, Polyamiden oder Aluminiumalkoholaten.

Die Alkydharze haben im allgemeinen eine Molmasse von 500 bis 100000 g/mol, vorzugsweise von 1000 bis 50000 g/mol, insbesondere von 1500 bis 20000 g/mol, vorzugsweise bestimmt durch Laserlicht-Streuung, siehe bspw. "Static Light Scattering of Polystyrene Reference Materials: Round Robin Test", U.Just, B.Werthmann International Journal of Polymer Analysis and Characterization, 1999 Vol.5, Seiten 195 - 207.

Die erfindungsgemäßen Bindemittelformulierungen enthalten vorzugsweise 1 bis 80 Gew.-%, bevorzugt 2 bis 70 Gew.-% und besonders bevorzugt 3 bis 60 Gew.-% an Alkydharz.

Bevorzugt enthält die erfindungsgemäße Bindemittelformulierung ein Alkydharz-basiertes Bindemittel und zur oxidativen Trocknung ein Übergangsmetalltrockner. Unter Übergangsmetalltrockner werden im Rahmen dieser Anmeldung insbesondere Übergangsmetallverbindungen verstanden, die die Trocknung und Härtung des Alkydharz-basierten Bindemittels beschleunigen.

Bevorzugt sind die Salze von Übergangsmetallen der Gruppen Vb, VIb, VIIb, VIII und Ib des chemischen Periodensystems. Insbesondere handelt es sich um die Salze von Cobalt, Mangan, Vanadium, Nickel, Kupfer und Eisen, besonders bevorzugt um Cobalt, Mangan, Eisen und Vanadium. Sie müssen nicht unbedingt nur allein eingesetzt, sondern können auch in Kombination mit nicht Übergangsmetallsalzen, wie Beispielsweise Blei, Calcium oder Zirkonium zum Einsatz kommen.

Die bevorzugten Übergangsmetallsalze sind in Testbenzin, bei 20 °C in einer Menge von mehr als 10 g/l löslich. Vorzugsweise handelt es sich um die Salze von Carbonsäuren, die eine gute Verträglichkeit mit den Alkydharz-Bindemitteln haben und gleichzeitig eine ausreichende Löslichkeit des Metallsalzes gewährleisten. Verwendet werden bevorzugt Übergangsmetallsalze von Fettsäuren wie Oleate oder Linoleate, Harzsäuren wie Resinate oder Salze der 2-Ethylhexansäure (Octoate). Bevorzugte Übergangsmetalltrockner sind Cobaltoctoat und Cobaltnaphthenat z.B. Octasoligen®-Cobalt 12 der Firma Borchers.

Bevorzugt enthalten die erfindungsgemäßen Bindemittelformulierungen die Übergangsmetalltrockner in einer Menge von 0,001 bis 1 Gew.-%, bevorzugt 0,005 bis 0,5 Gew.-% und ganz besonders bevorzugt 0,01 bis 0,1 Gew.-%, jeweils bezogen auf Bindemittel.

Die Bindemittelformulierungen enthalten in einer bevorzugten Ausführungsform wenigstens ein polares organisches Lösungsmittel, vorzugsweise ein polares protisches Lösungsmittel. Als solche kommen beispielsweise polare protische wie Dipropylenglykol-monomethylether (z.B. Dowanol DPM der Fa. Dow Chemical) sowie vorzugsweise in Kombination dazu polare aprotische Lösungsmittel, wie Dimethylformamid und Dimethylsulfoxid, sowie z.B. veretherte Glykole, Oligoglykole und Polyglykole, veretherte Polyole und veresterte Polyole, Ester von ein- sowie mehrwertigen Carbonsäuren, z.B. Adipinsäurediisobutylester, Maleinsäurediisobutylester (z.B. Rhodiasolv DIB) in Frage.

Besonders bevorzugt ist die Bindemittelformulierung, enthaltend

1 bis 80 Gew.-%, bevorzugt 2 bis 70 Gew.-%, besonders bevorzugt 3 bis 60 Gew.-% Alkydharzbinder

0 bis 50 Gew.-%, bevorzugt 0 bis 45 Gew.-%, besonders bevorzugt 0 bis 40 Gew.-%. Farbpigmente

0,01 bis 5 Gew.-%, bevorzugt 0,05 bis 3 Gew.-%, besonders bevorzugt 0,1 bis 2 Gew.-% Iodhaltige Verbindung, insbesondere Biozid

0,001 bis 5 Gew.-%, bevorzugt 0,005 bis 3 Gew.-%, besonders bevorzugt 0,01 bis 2 Gew.-% Aziridinverbindung der Formel (I),

2 bis 97 Gew.-% Lösungsmittel, insbesondere polare Lösungsmittel, davon bis zu 10 Gew.%, insbesondere 0,01 bis 7,5 Gew.-%, bezogen auf die Bindemittelpräparation an polaren aprotischen Lösungsmitteln und

0,001 bis 3 Gew.-% eines Übergangsmetalltrockners.

Besonders bevorzugt sind erfindungsgemäße Bindemittelformulierungen, enthaltend wenigstens eine Alkydharz, wenigstens ein Übergangsmetalltrockner, IPBC, wenigstens eine Aziridinverbindung der Formel (I) und wenigstens ein Lösungsmittel.

Die Bindemittelformulierung kann darüber hinaus noch Füller, Hautverhinderungsmittel, Rheologieadditive wie beispielsweise Antiabsetzmittel und Thixotropiermittel, weitere Biozide wie Fungizide, Bakterizide, Antifoulingmittel und Algizide, Lösungsmittel, Prozessadditive, Weichmacher, UV- und Hitzestabilisatoren, sowie Korrosionsinhibitoren in üblichen Mengen enthalten.

Zusätzlich können den Bindemittelformulierungen noch weitere Stabilisatoren zugesetzt werden, wie beispielsweise die in WO 98/22543 genannten Chelatisierungsreagentien oder die in WO 00/16628 genannten organischen Epoxide. In vielen Fällen werden hier synergistische Effekte beobachtet.

Darüber hinaus können bei der erfindungsgemäßen Verwendung auch noch ein oder mehrere Stabilisatoren aus der Reihe der Antioxidantien, Radikalfänger, UV-Stabilisatoren, Chelatoren und UV-Absorber zugesetzt werden, die teilweise synergistische Wirkungen aufweisen.

Beispielhaft seien als weitere UV-Stabilisatoren genannt:
sterisch gehinderten Phenole, wie
2,6-Di-tert.-butyl-4-methylphenol, 2-tert.-Butyl-4,6-dimethylphenol, 2,6-Di-cyclopentyl-4-methylphenol, 2-(α-Methylcyclohexyl)-4,6-dimethylphenol, 2,6-Di-octadecyl-4-methylphenol oder 2,6-Di-tert.-butyl-4-methoxymethylphenol, Diethyl-(3,5-di-tert-butyl-4-hydroxybenzyl)phosphonate, 2,4-Dimethyl-6-(1-methylpentadecyl)-phenol, 2-Methyl-4,6-Bis[(octylthio)methyl]phenol, 2,6-Di-tert.-butyl- 4-methoxyphenol, 2,5-Di-tert.-butyl-hydrochinon, 2,5-Di-tert.-amyl-hydrochinon, 2,6-Diphenyl-4-octadecyloxyphenol, 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol), 2,2'-Methylen-bis-(6-tert.-butyl-4-methylphenol), 2,2'-Methylen-bis-(4-methyl-6-cyclohexylphenol), 2,2'-Methylen-bis-(4,6-di-tert.-butylphenol), 2,2'-Ethyliden-bis-(4,6-di-tert.-butylphenol), 4,4'-Methylen-bis-(2,6-di-tert.-butylphenol), 4,4'-Methylen-bis-(6-tert.-butyl- 2-methylphenol), 1,1-Bis-(5-tert.-butyl-4-hydroxy-2-methylphenyl)-butan, 1,1,3-Tris-(5-tert.-butyl-4-hydroxy-2-methylphenyl)-butan, 1,3,5-Tri-(3,5-di-tert.-butyl-4-hydroxybenzyl)-2,4,6-trimethylbenzol, 3,5-Di-tert.-butyl-4-hydroxybenzyl- mercaptoessigsäure-isooctylester, 1,3,5-Tris-(3,5-di-tert.-butyl-4-hydroxybenzyl)-isocyanurat, 1,3,5-Tris-(4-tert.butyl-3-hydroxy-2,6-dimethylbenzyl)-isocyanurat, 1,3,5-Tris[(3,5-di-tert-butyl-4-hydroxyphenyl)propionyloxyethyl] isocyanurate, 3,5-Di-tert.-butyl-4-hydroxybenzyl-phosphonsäure-dioctadecylester, 3,5-Di-tert.-butyl-4-hydroxybenzyl-phosphonsäure-monoethylester-Calcium-salz, N,N'-Di-(3,5-di-tert.-butyl-4-hydroxyphenylpropionyl)-hexamethylendiamin, N,N`-Di-(3,5-di-tert.-butyl-4-hydroxyphenylpropionyl)-trimethylendiamin, N,N'-Di-(3,5-di-tert-butyl-4-hydroxyphenyl-propionyl)-hydrazin, 3,9-Bis[1,1-dimethyl-2-[(3-tert-butyl-4-hydroxy-5-methylphenyl)propionyloxy]ethyl]-2,4,8,10-tetraoxaspiro[5.5]undecane, Bis[3,3-bis(4'-hydroxy-3'-tert-butylphenyl)butanoic acid] ethylene glycol ester, 2,6-bis[[3-(1,1-dimethylethyl)-2-hydroxy-5-methylphenyl]octahydro-4,7-methano-1H-indenyl]-4-methyl-phenol (= Wingstay L), 2,4-Bis(n-octylthio)-6-(3,5-di-tert-butyl-4-hydroxyphenylamino)-s-triazine, N-(4-Hydroxyphenyl)octadecanamide, 2,4-Di-tert-butylphenyl 3',5'-di-tert-butyl-4'-hydroxybenzoate, (Benzoic acid, 3,5-bis(1,1-dimethylethyl)-4-hydroxy-, hexadecyl ester), 3-Hydroxyphenyl benzoate, 2,2'-Methylenebis(6-tert-butyl-4-methylphenol) monoacrylate, 2-(1,1-dimethylethyl)-6-[1-[3-(1,1-dimethylethyl)-5-(1,1-dimethylpropyl)-2-hydroxyphenyl]ethyl]-4-(1,1-dimethylpropyl)phenyl ester,
Ester der β-(3,5-Di-tert.-butyl-4-hydroxyphenyl)-propionsäure mit ein- oder mehrwertigen Alkoholen wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid,
Ester der β-(5-tert--Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid.

Gehinderte Amine wie,
Bis(1,2,2,6,6-pentamethyl-4-piperidyl) 2-(3,5-di-tert-butyl-4-hydroxybenzyl)-2-butyl malonate, Bis(2,2,6,6-tetramethyl-4-piperidyl) decanedioate, Dimethyl succinate-1-(2-hydroxyethyl)-4-hydroxy-2,2,6,6-tetramethylpiperidine copolymer, Poly[[6-[(1,1,3,3-tetramethylbutyl)amino]-1,3,5-triazine-2,4-diyl][(2,2,6,6-tetramethyl-4-piperidyl)imino]hexamethylene[(2,2,6,6-tetramethyl-4-piperidyl)imino]] (CAS-Nr 71878-19-8), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (CAS-Nr. 106990-43-6), Bis(1,2,2,6,6-pentamethyl-4-piperidyl) decanedioate, Bis(1,2,2,6,6-pentamethyl-4-piperidyl) 2-(3,5-di-tert-butyl-4-hydroxybenzyl)-2-butyl malonate, Decanedioic acid, bis(2,2,6,6-tetramethyl-4-piperidinyl) ester, reaction products with tert-Bu hydroperoxide and octane (CAS-Nr 129757-67-1), Chimasorb 2020 (CAS-Nr 192268-64-7), Poly[[6-morpholino-1,3,5-triazine-2,4-diyl][(2,2,6,6-tetramethyl-4-piperidinyl)imino]-1,6-hexanediyl[(2,2,6,6-tetramethyl-4-piperidinyl)imino]], Poly[[6-(4-morpholinyl)-1,3,5-triazine-2,4-diyl][(1,2,2,6,6-pentamethyl-4-piperidinyl)imino]-1,6-hexanediyl[(1,2,2,6,6-pentamethyl-4-piperidinyl)imino]] (9CI), 3-Dodecyl-1-(2,2,6,6-tetramethyl-4-piperidyl)pyrrolidine-2,5-dione, 3-Dodecyl-1-(1,2,2,6,6-pentamethylpiperidin-4-yl)pyrrolidine-2,5-dione,,4-Octadecanoyloxy-2,2,6,6-tetramethylpiperidine, Poly[[6-(cyclohexylamino)-1,3,5-triazine-2,4-diyl][(2,2,6,6-tetramethyl-4-piperidinyl)imino]-1,6-hexanediyl[(2,2,6,6-tetramethyl-4-piperidinyl)imino]], 1H,4H,5H,8H-2,3a,4a,6,7a,8a-Hexaazacyclopenta[def]fluorene-4,8-dione, hexahydro-2,6-bis(2,2,6,6-tetramethyl-4-piperidinyl)- (CAS-Nr 109423-00-9), N,N'-Bis(formyl)-N,N'-bis(2,2,6,6-tetramethyl-4-piperidyl)-1,6-hexanediamine, N-(tetramethyl-4-piperidinyl)maleimide-C20-24-α-olefin copolymer (CAS-Nr 199237-39-3), Tetrakis(1,2,2,6,6-pentamethyl-4-piperidyl) 1,2,3,4-butanetetracarboxylate, Tetrakis(2,2,6,6-tetramethyl-4-piperidyl) 1,2,3,4-butanetetracarboxylate, 1,2,2,6,6-Pentamethyl-4-piperidinyl tridecyl 1,2,3,4-butanetetracarboxylate, (1,2,3,4-Butanetetracarboxylic acid, 2,2,6,6-tetramethyl-4-piperidinyl tridecyl ester), (2,4,8,10-Tetraoxaspiro[5.5]undecane-3,9-diethanol, β,β,β',β'-tetramethyl-, polymer with 1,2,3,4-butanetetracarboxylic acid) (CAS-Nr 115055-30-6), 2,2,4,4-Tetramethyl-21-oxo-7-oxa-3,20-diazadispiro[5.1.11.2]heneicosane, (7-Oxa-3,20-diazadispiro[5.1.11.2]heneicosane-20-propanoic acid, 2,2,4,4-tetramethyl-21-oxo-, tetradecyl ester), (7-Oxa-3,20-diazadispiro[5.1.11.2]-heneicosan-21-one, 2,2,4,4-tetramethyl-20-(oxiranylmethyl)-), (Propanamide, N-(2,2,6,6-tetramethyl-4-piperidinyl)-3-[(2,2,6,6-tetramethyl-4-piperidinyl)amino]-), (1,3-Propanediamine, N,N"-1,2-ethanediylbis-, polymer with 2,4,6-trichloro-1,3,5-triazine, reaction products with N-butyl-2,2,6,6-tetramethyl-4-piperidinamine) (CAS-Nr 136504-96-6), 1,1'-Ethylenebis(3,3,5,5-tetramethyl-2-piperazinone), (Piperazinone, 1,1',1"-[1,3,5-triazine-2,4,6-triyltris[(cyclohexylimino)-2,1-ethanediyl]]tris[3,3,5,5-tetramethyl-), (7-Oxa-3,20-diazadispiro[5.1.11.2]heneicosane-20-propanoic acid, 2,2,4,4-tetramethyl-21-oxo-, dodecyl ester), 1,1-Bis(1,2,2,6,6-pentamethyl-4-piperidyloxycarbonyl)-2-(4-methoxyphenyl)ethene, (2-Propenoic acid, 2-methyl-, methyl ester, polymer with 2,2,6,6-tetramethyl-4-piperidinyl 2-propenoate) (CAS-Nr 154636-12-1), (Propanamide, 2-methyl-N-(2,2,6,6-tetramethyl-4-piperidinyl)-2-[(2,2,6,6-tetramethyl-4-piperidinyl)amino]-), (D-Glucitol, 1,3:2,4-bis-O-(2,2,6,6-tetramethyl-4-piperidinylidene)-) (CAS-Nr 99473-08-2), N,N'-Bis(2,2,6,6-tetramethyl-4-piperidinyl)isophthalamide, 4-Hydroxy-2,2,6,6-tetramethylpiperidine, 1-Allyl-4-hydroxy-2,2,6,6-tetramethylpiperidine, 1-Benzyl-4-hydroxy-2,2,6,6-tetramethylpiperidine, 1-(4-tert.-Butyl-2-butenyl)-4-hydroxy-2,2,6,6-tetramethylpiperidine, 4-Stearoyloxy-2,2,6,6-tetramethylpiperidine, 1-Ethyl-4-salicyloyloxy-2,2,6,6-tetramethylpiperidine, 4-Methacryloyloxy-1,2,2,6,6-pentamethylpiperidine, 1,2,2,6,6-Pentamethylpiperidin-4-yl-β-(3,5-ditert.-butyl-4-hydroxyphenyl)-propionate, 1-Benzyl-2,2,6,6-tetramethyl-4-piperidinylmaleinate, (Di-2,2,6,6-tetramethylpiperidin-4-yl)-adipate, (Di-2,2,6,6-tetramethylpiperidin-4-yl)-sebacate, (Di-1,2,3,3,6-tetramethyl-2,6-diethyl-piperidin-4-yl)sebacate, (Di-1-allyl-2,2,6,6-tetramethyl-piperidin-4-yl)phthalate, 1-Propargyl-4-β-cyanoethyloxy-2,2,6,6-tetramethylpiperidine, 1-Acetyl-2,2,6,6-tetramethylpiperidin-4-yl-acetate, Trimellitic acid-tri-(2,2,6,6-tetramethylpiperidin-4-yl)ester, 1-Acryloyl-4-benzyloxy-2,2,6,6-tetramethylpiperidine, Dibutyl-malonic acid-di-(1,2,2,6,6-pentamethyl-piperidin-4-yl)ester, Butyl-(3,5-di-tert-butyl-4-hydroxybenzyl)-malonic acid-di-(1,2,2,6,6-pentamethylpiperidin-4-yl)ester, Dibenzyl- malonic acid-di-(1,2,2,6,6-pentamethylpiperidin-4-yl)ester, Dibenzyl-malonic acid-di-(1,2,3,6-tetramethyl-2,6-diethyl-piperidin-4-yl)ester, Hexane-1',6'-bis-(4-carbamoyloxy-1-n-butyl-2,2,6,6-tetramethylpiperidine), Toluene-2',4'-bis-(4-carbamoyloxy-1-n-propyl-2,2,6,6-tetramethylpiperidine), Dimethyl-bis-(2,2,6,6- tetramethylpiperidine-4-oxy)silane, Phenyl-tris-(2,2,6,6-tetramethylpiperidine-4-oxy)silane, Tris-(1-propyl-2,2,6,6-tetramethylpiperidin-4-yl)phosphite, Tris-(1-propyl-2,2,6,6-tetramethylpiperidin-4-yl)phosphate, Phenyl-[bis-(1,2,2,6,6-pentamethylpiperidin-4-yl)phosphonate, Di(1,2,2,6,6-pentamethylpiperidin-4-yl)sebacate, N,N'-Bis-(2,2,6,6-tetramethylpiperidin-4-yl)hexamethylene-1,6-diamine, N,N'-Bis-(2,2,6,6-tetramethylpiperidin-4-yl)hexamethylene-1,6-diacetamide, 1-Acetyl-4-(N-cyclohexylacetamido)-2,2,6,6-tetramethylpiperidine, 4-Benzylamino-2,2,6,6-tetramethylpiperidine, N,N'-Bis-(2,2,6,6-tetramethylpiperidin-4-yl)-N,N'-dibutyladipamide, N,N'-Bis-(2,2,6,6-tetramethylpiperidin-4-yl)-N,N'-dicyclohexyl-(2-hydroxypropylene), N,N'-Bis-(2,2,6,6-tetramethylpiperidin- 4-yl)-p-xylylenediamine, 4-(Bis-2-hydroxyethyl)-amino-1,2,2,6,6-pentamethylpiperidine, 4-(3-Methyl-4-hydroxy-5-tert.-butyl-benzoicacidamido)-2,2,6,6-tetramethylpiperidine, 4-Methacrylamino-1,2,2,6,6-pentamethylpiperidine, 9-Aza-8,8,10,10-tetramethyl-1,5-dioxaspiro[5.5]undecane, 9-Aza-8,8,10,10-tetramethyl-3-ethyl-1,5-dioxaspiro[5.5]undecane, 8-Aza-2,7,7,8,9,9-hexamethyl- 1,4-dioxaspiro[4.5]decane, 9-Aza-3-hydroxymethyl-3-ethyl-8,8,9,10,10-pentamethyl-1-5-dioxaspiro[5.5]undecane, 9-Aza-3-ethyl-3-acetoxymethyl- 9-acetyl-8,8,10,10-tetramethyl- 1,5-dioxaspiro[5.5]undecane, 2,2,6,6-Tetramethyl-piperidine-4-spiro-2'-(1',3'-dioxane)5'-spiro-5"-(1",3"-dioxane)-2"-spiro4"-(2"',2"',6"',6"'-tetrameth ylpiperidine),3-Benzyl-1,3,8-triaza-7,7,9,9-tetramethyl-spiro[4.5]decane-2,4-dione, 3-n-Octyl-1,3,8-triaza-7,7,9,9-tetramethyl-spiro[4.5]decane-2,4-dione, 3-Allyl-1,3,8-triaza-1,7,7,9,9-pentamethyl-spiro[4.5]decane-2,4-dione, 3-Glycidyl-1,3,8-triaza-7,7,8,9,9-pentamethyl-spiro[4.5]decane-2,4-dione, 2-Isopropyl-7,7,9,9-tetramethyl-1-oxa-3,8-diaza-4-oxyspiro[4.5]decane, 2-Butyl-7,7,9,9-tetramethyl-1-oxa-3,8-diaza-4-oxyspiro[4.5]decane, 2-Isopropyl-7,7,9,9-tetramethyl-1-oxa-4,8-diaza-oxyspiro[4.5]decane, 2-Butyl-7,7,9,9-tetramethyl-1-oxa-4,8-diaza-3-oxyspiro[4.5]decane, Bis-[β-(2,2,6,6-tetramethylpiperidino)-ethyl]-sebacate, α-(2,2,6,6-tetramethylpiperidino)-acetic acid-n-octyl ester, 1,4-bis-(2,2,6,6-tetramethylpiperidino)-2-butene, N-Hydroxymethyl-N'-2,2,6,6-tetramethylpiperidin-4-yl-urea, N-Methoxymethyl-N'-2,2,6,6-tetramethylpiperidin-4-yl-urea, N-Methoxymethyl-N'-n-dodecyl- N'-2,2,6,6-tetramethylpiperidin-4-yl-urea, O-(2,2,6,6-Tetramethylpiperidin-4-yl)-N-methoxymethyl-urethane.
Phosphite und Phosphonate wie,
Tri(nonylphenyl) phosphite, Tris(2,4-di-tert-butylphenyl) phosphite, Bis(2,4-di-tert-butylphenyl) pentaerythritol diphosphite, Bis(2,6-di-tert-butyl-4-methylphenyl)pentaerythritol diphosphite, 2,2'-Methylenebis(4,6-di-tert-butylphenyl) octyl phosphite, Tetrakis(2,4-di-tert-butylphenyl)[1,1'-biphenyl]-4,4'-diylbisphosphonite, 2,2'-Ethylidenebis(4,6-di-tert-butylphenyl) fluorophosphite, Dioctadecyl pentaerythritol diphosphonite, 2-[[2,4,8,10-Tetrakis(1,1-dimethylethyl)dibenzo[d,f]-[1,3,2]dioxaphosphepin-6-yl]oxy]-N,N-bis [2-[[2,4,8,10-tetrakis(1,1-dimethylethyl)dibenzo-[d,f][1,3,2]dioxaphosphepin-6-yl]oxy]ethyl]ethanamine (CAS-Nr. 80410-33-9), Bis(2,4-di-tert-butyl-6-methylphenyl) ethyl phosphite, 2,4,6-Tri-tert-butylphenyl-2-butyl-2-ethyl-1,3-propanediol phosphite, Bis(2,4-dicumylphenyl) pentaerythritol diphosphite,
Hydroxylamine wie,
Amines, bis(hydrogenated tallow alkyl), oxidized ,
Sekundare Arylamine wie,
N-(2-Naphthyl)-N-phenylamine, 2,2,4-Trimethyl-1,2-dihydroquinoline polymer (CAS-Nr: 26780-96-1), N-2-Propyl-N'-phenyl-p-phenylenediamine, N-(1-Naphthyl)-N-phenylamine, (Benzenamine, N-phenyl-, reaction products with 2,4,4-trimethylpentene) (CAS-Nr. 68411-46-1), 4-(1-Methyl-1-phenylethyl)-N-[4-(1-methyl-1-phenylethyl)phenyl]aniline.

Lactone und Benzofuranone wie,

Irganox HP 136 (CAS Nr. 181314-48-7)

Thioether und Thioester wie,

Distearyl-3,3-thiodipropionate, Dilauryl 3,3'-thiodipropionate, Ditetradecylthiodipropionate, Di-n-octadecyl disulfide.

UV-Absorber wie,

(Methanone, [methylenebis(hydroxymethoxyphenylene)]bis[phenyl-), (Methanone, [1,6-hexanediylbis[oxy(2-hydroxy-4,1-phenylene)]]bis[phenyl-), 2-Benzoyl-5-methoxyphenol, 2,4-Dihydroxybenzophenone, 2,2'-Dihydroxy-4-methoxybenzophenone, 2-Hydroxy-4-octyloxybenzophenone, 2-Hydroxy-4-dodecyloxybenzophenone, 2-(2-Hydroxy-4-hexyloxyphenyl)-4,6-diphenyl-1,3,5-triazine, 2,4-Bis(2,4-dimethylphenyl)-6-(2-hydroxy-4-octyloxyphenyl)-1,3,5-triazine, 2-Ethoxy-2'-ethyloxalic acid bisanilide, N-(5-tert-Butyl-2-ethoxyphenyl)-N'-(2-ethylphenyl)oxamide, Dimethyl (p-methoxybenzylidene)malonate, 2,2'-(1,4-Phenylene)bis[3,1-benzoxazin-4-one], N'-(4-Ethoxycarbonylphenyl)-N-methyl-N-phenylformamidine, 4-Methoxycinnamic acid 2-ethylhexyl ester, 4-Methoxycinnamic acid isoamyl-ester, 2-Phenylbenzimidazole-5-sulfonsäure, 2-Cyano-3,3-diphenylacrylic acid 2-ethylhexyl ester, 2-Ethylhexyl salicylate, 3-(4-Methylbenzylidene)bornan-2-one,

Chelatoren wie,

Ethylendiamintetraacetat (EDTA), Ethylendiamin,Acetylaceton, Nitrilotriessigsäure, Ethylenglycol-bis(β-aminoethyl ether)-N,N-tetraessigsäure, 2,2'-Bipyridine, 4,4'-Dimethyl-2,2'-bipyridin, 2,2',6',2"-Terpyridin, ,4,4'Diphenyl-2,2'-bipyridin, 2,2'-Bipyridin-3,3'-diol, 1,10-Phenanthroline, 4-Methyl-1,10-phenanthroline, 5-Methyl-1,10-phenanthroline, 4,7-Dimethyl-1,10-phenanthroline, 5,6-Dimethyl-1,10-phenanthroline, 3,4,7,8-Tetramethyl-1,10-phenanthroline, 4,7-Diphenyl-1,10-phenanthroline, 2,4,7,9-Tetramethyl-1,10-phenanthroline, N,N,N',N'-Tetramethylethylendiamin, 2-Hydroxychinolin, 8-Hydroxychinolin, 2-Hydroxy-4-methyl-chinaldin, 5-Chlor-8-hydroxychinolin, 5,7-Dichlor-8-hydroxychinolin, 2,4-Chinolindiol, 2-Chinolinthiol, 8-Chinolinthiol, 8-Aminochinolin, 2,2'-Bichinolin, 2-Chinoxalinol, 3-Methyl-2-chinoxalinol, 2,3-Dihydroxychinoxaline, 2-Mercaptopyridin, 2-Dimethylaminopyridin, 1,2-Bis(Dimethylphosphino)ethan, 1,2-Bis-(diphenylphosphino)ethan, 1,3-bis(diphenylphosphino)propane, 1,4-Bis(diphenylphosphino)butan, Polyasparaginsäure, Iminodisuccinat.

Iod-haltige Verbindungen, insbesondere Biozide werden vor allem in Gegenwart der oben näher beschriebenen Trockner abgebaut. Obwohl die stärksten Effekte in Gegenwart dieser Trockner beobachtet werden, haben auch eine Reihe von weiteren Farbkomponenten einen destabilisierenden Effekt auf Iod-haltige Verbindungen, insbesondere Biozide. Zu nennen sind hier anorganische und organische Pigmente, Füller, Hautverhinderungsmittel, Rheologieadditive wie beispielsweise Antiabsetzmittel und Thixotropiermittel, weitere Verbindungen, insbesondere Biozide wie Fungizide, Bakterizide, Antifoulingmittel und Algizide, Lösungsmittel, Prozessadditive, Weichmacher, UV- und Hitzestabilisatoren, Korrosionsinhibitoren usw. Die Aziridinverbindungen zeigen auch hier einen stark stabilisierenden Effekt.

Die erfindungsgemäßen Zusammensetzungen eingesetzt in oxidativ trocknenden Bindemittelpräparationen, bzw. die erfindungsgemäßen Bindemittelpräparationen selbst zeigen eine gegenüber unstabilisierten Iodhaltigen Systemen, insbesondere IPBC-haltigen Systemen eine deutliche Reduzierung der Trockenzeit.

Die Erfindung betrifft auch ein Verfahren zur Herstellung der Bindemittelformulierungen, durch Vermischen der Einzelkomponenten, vorzugsweise bei einer Temperatur von 5 bis 30°C, insbesondere von 15 - 25°C.

Bevorzugte Bindemittelformulierungen sind solche erhältlich nach dem erfindungsgemäßen Herstellungsverfahren.

Bevorzugt werden die erfindungsgemäßen Bindemittelformulierungen als Anstrichmittel, insbesondere als Farben, Lacke, Grundierungen, Imprägnierungen und Lasuren eingesetzt. Entsprechend betrifft die Erfindung auch die Verwendung der erfindungsgemäßen Bindemittelformulierungen als Anstrichmittel.

Die Erfindung betrifft weiterhin die Verwendung der erfindungsgemäßen Zusammensetzung zum Schutz von technischen Materialien gegen Zerstörung oder Befall durch Mikroorganismen.

Die erfindungsgemäßen Zusammensetzungen eignen sich zum Schutz von technischen Materialien. Unter technischen Materialien sind im vorliegenden Zusammenhang nicht-lebende Materialien zu verstehen, die für die Verwendung in der Technik zubereitet worden sind. Beispielsweise handelt es sich bei den technischen Materialien um Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen oder zersetzt werden können.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Bakterien.

Es seien beispielsweise Mikroorganismen der folgenden Gattungen genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Die Erfindung betrifft weiterhin die technischen Materialien, enthaltend wenigstens eine Iod-haltige Verbindung, insbesondere Biozid und wenigstens eine Aziridinverbindung der Formel (I).

### Beispiele:

In den folgenden Beispielen werden durch Lagerung bei erhöhter Temperatur beschleunigte Stabilitätstests durchgeführt. Die Gehaltsbestimmung des IPBC erfolgte in allen Fällen per HPLC.

### Beispiele 1-4

Die Beispiele 1-4 verdeutlichen anhand von Untersuchungen die Empfindlichkeit von IPBC gegenüber Übergangsmetalltrockner.

### Beispiel 1 (IPBC)

Es werden 3,4900g (0,0124mol) IPBC in einen 50ml Messkolben eingewogen, mit Tripropylenglykol-Monomethylether (Dowanol® TPM) auf 50 ml aufgefüllt und die Lösung in einen inertisierten (N₂) 100ml-Zweihalskolben überführt. Nach Entnahme einer Probe zur Bestimmung des IPBC-Anfangsgehaltes zum Zeitpunkt (t₀) wird der Kolben in ein auf 60°C temperiertes Ölbad abgesenkt und die Lösung unter Stickstoff gerührt. Zur Bestimmung des IPBC-Gehalts über die Zeit werden in Intervallen mittels einer Hamilton-Spritze Proben entnommen, auf Raumtemperatur abgekühlt und dann definiert verdünnt. Hierzu werden 0,5ml der Probe im Maßkolben mit Acetonitril (MeCN) auf 10ml aufgefüllt und direkt vermessen (HPLC). Tabelle 1 zeigt den Verlauf der IPBC-Anteile als Funktion der Zeit.

**Tabelle 1: Bestimmung des IPBC-Gehaltes (Messfehler ca.10%).**

| Zeit [h] | Relativer IPBC-Gehalt [%] |
|---|---|
| 0 | 100 |
| 0,5 | 94 |
| 1 | 100 |
| 2 | 93 |
| 4 | 99 |
| 7 | 93 |

### Beispiel 2 (IPBC + Co-Trockner)

Es werden 3,532g (12,60mmol) IPBC in einen 50ml Messkolben eingewogen, mit Tripropylenglykol-Monomethylether (Dowanol® TPM) auf 50 ml aufgefüllt und die Lösung in einen inertisierten (N₂) 100ml-Zweihalskolben überführt, in dem 1,260g Octasoligen®-Cobalt 12 der Firma Borchers (Cobalt(II)-carboxylate verzweigter C₆-C₁₉-Fettsäuren, gelöst in Testbenzin, 12% Gehalt an Co; 2,566mol Co) vorgelegt wurden. Nach 1 min Rühren und Entnahme einer Probe zur Bestimmung des IPBC-Anfangsgehaltes zum Zeitpunkt (t₀) wird der Kolben in ein auf 60°C temperiertes Ölbad abgesenkt und die Lösung unter Stickstoff gerührt. Die Bestimmung des IPBC-Gehalts erfolgt wie im Beispiel 1. Die Tabelle 2 zeigt den Verlauf des IPBC-Gehaltes als Funktion der Zeit.

**Tabelle 2: Bestimmung des IPBC-Gehaltes (Messfehler ca. 10%).**

| Zeit [h] | Relativer IPBC-Gehalt [%] |
|---|---|
| 0 | 100 |
| 0,5 | 87 |
| 1 | 82 |
| 2 | 72 |
| 4 | 55 |
| 7 | 37 |

### Beispiel 3 (IPBC + Aziridinverb. + Co-Trockner)

Es werden 3,741g (13,31mmol) IPBC in einen 50ml Meßkolben eingewogen, mit Tripropylenglykol-Monomethylether (Dowanol® TPM) auf 50 ml aufgefüllt und die Lösung in einen inertisierten (N₂) 100ml-Zweihalskolben überführt, in dem 1,252g Octasoligen®-Cobalt 12 der Firma Borchers (Cobalt(II)-carboxylate verzweigter C₆-C₁₉-Fettsäuren, gelöst in Testbenzin, 12% Gehalt an Co; 2,549mmol Co) vorgelegt wurden. Nach Zugabe von 7,551g (16,64mmol) Trimethylolpropan-tris[3-(2-methyl-1-aziridinyl)propionat] (Crosslinker CX-100 von DSM), 1 min Rühren und Entnahme einer Probe zur Bestimmung des IPBC-Anfangsgehaltes zum Zeitpunkt (t₀) wird der Kolben in ein auf 60°C temperiertes Ölbad abgesenkt und die Lösung unter Stickstoff gerührt. Die Bestimmung des IPBC-Gehalts erfolgt wie im Beispiel 1. Die Tabelle 3 zeigt den Verlauf des relativen IPBC-Gehalts als Funktion der Zeit.

**Tabelle 3: Bestimmung des IPBC-Gehaltes.**

| Zeit [h] | Relativer IPBC-Gehalt [%] |
|---|---|
| 0 | 100 |
| 0,5 | 109 |
| 1 | 101 |
| 2 | 105 |
| 4 | 97 |
| 7,5 | 93 |

Im Rahmen des Messfehlers (ca. 10%) ist kein IPBC-Abbau festzustellen.

### Beispiel 4 (IPBC + Aziridinverb. + Co-Trockner)

Es werden 1,3583g 4,832mol) IPBC in einen 20ml Meßkolben eingewogen, mit Tripropylenglykol-Monomethylether (Dowanol® TPM) auf 20ml aufgefüllt und die Lösung in einen inertisierten (N₂) 50ml-Zweihalskolben überführt, in dem 0,5123g Octasoligen®-Cobalt 12 der Firma Borchers (Cobalt(II)-carboxylate verzweigter C6-C19-Fettsäuren, gelöst in Testbenzin, 12% Gehalt an Co; 1,043mol Co) vorgelegt wurden. Nach Zugabe von 5,018g (19,97mol) 7-Tolylsulfonyl-7-azabicyclo[4.1.0]heptan, 1 min Rühren und Entnahme einer Probe zur Bestimmung des IPBC-Anfangsgehaltes zum Zeitpunkt (t₀) wird der Kolben in ein auf 60°C temperiertes Ölbad abgesenkt und die Lösung unter Stickstoff gerührt. Die Bestimmung des IPBC-Gehalts erfolgt wie im Beispiel 1. Die Tabelle 4 zeigt den Verlauf des relativen IPBC-Gehaltes als Funktion der Zeit.

**Tabelle 4: Bestimmung des IPBC-Gehaltes.**

| Zeit [h] | Relativer IPBC-Gehalt [%] |
|---|---|
| 0 | 100 |
| 0,5 | 88 |
| 1 | 86 |
| 2 | 80 |
| 4 | 64 |
| 7 | 58 |

Im Rahmen des Messfehlers (ca. 10%) ist ein im Vergleich zu Beispiel 2 signifikant niedrigerer IPBC-Abbau festzustellen.

### Beispiel 5

In diesem Beispiel wird der stabilisierende Effekt des Aziridins Trimethylolpropan-tris[3-(2-methyl-1-aziridinyl)propionat] (Crosslinker CX-100 von DSM) sowie des Aziridins Trimethylolpropan-tris[3-(1-aziridinyl)propionat] (Corial Härter AN der Fa. BASF) auf das IPBC in Gegenwart eines Übergangsmetalltrockners (Co) und eines Metalloxidpigmentes (Eisenoxid) in einem typischen, Alkyd-basierten Anstrichsystem (Alkydlasur A) demonstriert. Zur Ausrüstung des Anstrichsystems werden Zusammensetzungen gemäß der Tabelle 5 eingesetzt:

| Tabelle 5 | | | |
|---|---|---|---|
| Konzentrat I | | Konzentrat II | |
| IPBC | 30 Gew.-% | IPBC | 30 Gew.-% |
| Rhodiasolv DIB* | 70 Gew.-% | Crosslinker CX-100** | 15 Gew.-% |
| | | Rhodiasolv DIB* | 55 Gew.-% |
| | | | |
| | | Konzentrat III | |
| | | IPBC | 30 Gew.-% |
| | | Corial Härter AN*** | 10 Gew.-% |
| | | Rhodiasolv DIB* | 60 Gew.-% |

| | | | |
|---|---|---|---|
| *Gemisch bestehend aus Diisobutyladipat, Diisobutylglutarat, Diisobutylsuccinat, Fa. Rhodia. ** Trimethylolpropan-tris[3-(2-methyl-1-aziridinyl)propionat] *** Trimethylolpropan-tris[3-(1-aziridinyl)propionat] | | | |

Die Rezeptur der verwendeten Alkydlasur ist der Tabelle 6 dargestellt (Alkydlasur A).

Zur Bestimmung der Stabilisierung wird ein beschleunigter Alterungstest durchgeführt. Hierzu wird das ausgerüstete Farbsystem in dicht schließende 200ml-Glasflaschen gefüllt, wobei nur eine minimale Restmenge Luft in dem Gebinde verbleibt, und bei 40°C gelagert. Die Ergebnisse sind der Tabelle 7 zu entnehmen.

| Tabelle 6 - Rezeptur einer pigmentierten Alkyd-basierten Lasur. | | | |
|---|---|---|---|
| | Inhaltsstoffe | Inhaltsstoffe der Alkydlasur A-I [%] | Inhaltsstoffe der Alkydlasur A-II [%] |
| Alkydlasur A | Vialkyd VAF 4349, 80 SD 60, Fa. Cytec | 22,5 | 22,5 |
| | Polares Lösungsmittel Texanol, Fa. Eastman | 5,0 | 5,0 |
| | Rheologieadditiv BYK E411, Fa. BYK | 0,4 | 0,4 |
| | Shellsol D60, Fa. Shell Chemicals | 65,47 | 65,47 |
| | MK-Solcolor Eisenoxidrot 130M (Pigmentpräparation), Fa. MK Chemicals | 4,0 | 4,0 |
| | Octa-Soligen® 69 (enthält 6% Co), Fa. Borchers | 0,3 | 0,3 |
| | Konzentrat I | 2,33 | - |
| | Konzentrat II | - | 2,33 |

Alkydlasur A-III = 97,67% Alkydlasur A + 2,33 % Konzentrat III.

| Tabelle 7 - Stabilität des IPBC in der Alkydlasuren A-I und A-II bei 40°C | | | |
|---|---|---|---|
| Lasur | IPBC[%], Start | IPBC[%], 2 Wochen | IPBC[%], 4 Wochen |
| A-I (Aziridin-frei) | 0,71 | 0,11 | 0 |
| A-II (Aziridin-haltig) | 0,69 | 0,67 | 0,62 |
| A-III (Aziridin-haltig) | 0,67 | 0,67 | 0,63 |

### Beispiel 6

In diesem Beispiel wird der stabilisierende Effekt des Aziridins Trimethylolpropan-tris[3-(2-methyl-1-aziridinyl)propionat] (Crosslinker CX-100 von DSM) auf das IPBC in einer handelsüblichen Holz-Dickschichtlasur "Alkydlasur B" (enthaltend Alkydharz, Testbenzin, Eisenoxidpigment, Trockner, Butanonoxim, UV-Absorber und Additive) im Vergleich zu Epoxiden, wie sie bspw. in EP1115287B1 beschrieben sind, demonstriert. Zur Ausrüstung des Anstrichsystems werden Zusammensetzungen gemäß Tabelle 8 eingesetzt:

| Tabelle 8 | | | |
|---|---|---|---|
| Konzentrat I | | | Konzentrat II |
| IPBC | 30 Gew.-% | IPBC | 30 Gew.-% |
| Rhodiasolv DIB* | 70 Gew.-% | Crosslinker CX-100** | 15 Gew.-% |
| | | Rhodiasolv DIB* | 55 Gew.-% |
| | | | |

| Konzentrat III | | Konzentrat IV | |
|---|---|---|---|
| IPBC | 30 Gew.-% | IPBC | 30 Gew.-% |
| DTGE¹⁾ | 30 Gew.-% | EEC²⁾ | 15 Gew.-% |
| Rhodiasolv DIB* | 40 Gew.-% | Rhodiasolv DIB* | 55 Gew.-% |

| | | | |
|---|---|---|---|
| Bedeutung von * und ** siehe Tabelle 5; ¹⁾ Mischung enthaltend die Epoxide 2-[(Dodecyloxy)methyl]-oxiran und 2-[(Tetradecyloxy)methyl]-oxiran (CAS-Nr. 68609-97-2), z.B. Fa. Aldrich. ²⁾ (3,4-Epoxycyclohexyl)methyl-3,4-epoxycyclohexylcarboxylat (CAS-Nr. 2386-87-0), z.B. Fa. Aldrich. | | | |

Darüber hinaus wurde auch eine kommerziell erhältliche IPBC-Formulierung (Troy Polyphase® 920, enthaltend 20% IPBC) eingesetzt, die im Folgenden als Konzentrat V bezeichnet wird. Die zu untersuchenden, mit 0.7 Gew.-% IPBC ausgerüsteten Dickschichtlasuren (Alkydlasur B-I bis Alkydlasur B-V) wurden durch Mischen von 97,67% der vorgenannten Alkydlasur B und jeweils 2,33 Gew% der Konzentrate I bis V hergestellt.

Zur Bestimmung der Stabilisierung wird ein beschleunigter Alterungstest durchgeführt. Hierzu wird das ausgerüstete Farbsystem in dicht schließende 200ml-Glasflaschen gefüllt, wobei nur eine minimale Restmenge Luft in dem Gebinde verbleibt, und bei 40°C gelagert. Die Ergebnisse sind der Tabelle 9 zu entnehmen, wonach nur die mit dem Aziridin "Crosslinker CX-100" ausgerüstete Alkydlasur B-II nach 4 Wochen Lagerung bei 40°C keinen signifikanten Abbau des IPBC zeigt.

| Tabelle 9 - Stabilität des IPBC in den Alkydlasur B-I bis B-V bei 40°C | | | | | | |
|---|---|---|---|---|---|---|
| | Restgehalt IPBC [%] bezogen auf den Startwert | | | | | |
| Alkydlasur B | Start | 2 Wochen | 4 Wochen | 8 Wochen | 12 Wochen | 16 Wochen |
| -I | 100 | 24 | 0 | - | - | - |
| -II | 100 | 95 | 95 | 86 | 56 | 7 |
| -III | 100 | 9 | 0 | - | - | - |
| -IV | 100 | 30 | 3 | 0 | - | - |
| -V | 100 | 52 | 0 | - | - | - |

### Beispiel 7

In diesem Beispiel wird gezeigt, dass der Zusatz des Aziridins Trimethylolpropan-tris[3-(2-methyl-1-aziridinyl)propionat] (Crosslinker CX-100 von DSM) zu der handelsüblichen Holz-Dickschichtlasur "Alkydlasur B" (s. Beispiel 6) eine durch die Ausrüstung mit IPBC bedingte unerwünschte Verlängerung der Trockenzeit des Anstrichmittels verhindern kann. Die untersuchten Lasuren sind in der Tabelle 10 dargestellt.

| **Tabelle 10** | | | |
|---|---|---|---|
| | **Alkydlasur B** | **Alkydlasur B-VI** | **Alkydlasur B-VII** |
| **Bestandteil** | **Anteil[%]** | **Anteil[%]** | **Anteil[%]** |
| Alkydlasur B | 100,0 | 99,50 | 99,20 |
| IPBC (z.B. Preventol® MP 100) | - | 0,50 | 0,50 |
| Crosslinker CX-100* | - | - | 0,30 |

| | | | |
|---|---|---|---|
| Bedeutung von * siehe Tabelle 5; | | | |

Die Bestimmung der Trockenzeiten wurde mit den frisch hergestellten Lasuren und mit den bei 40°C für 2 Wochen gelagerten Lasuren (beschleunigter Alterungstest) durchgeführt. Hierzu wurde mittels eines Filmziehgerätes von der jeweiligen Lasur ein Film der Stärke 90µm auf Glas aufgebracht und die Trockenzeiten mittels eines Trockenzeit-Messgerätes (z.B. BYK-Gardner) bestimmt, wobei jeweils die zur An- und Durchtrocknung des Filmes erforderliche Zeit gemessen wurde. Die Ergebnisse dieser Untersuchungen sind in der Tabelle 11 dargestellt.

| Tabelle 11 - Bestimmung der Trockenzeiten. | | | | |
|---|---|---|---|---|
| | Frische Probe | | 2 Wochen Lagerung 40°C | |
| | Antrocknung [h] | Durchtrocknung [h] | Antrocknung [h] | Durchtrocknung [h] |
| Alkydlasur B | 3.2 | 3.7 | 3.7 | 4.3 |
| Alkydlasur B-VI | 3.3 | 3.8 | 10.6 | >12 |
| Alkydlasur B-VII | 3.2 | 3.4 | 4.4 | 4.6 |

## Patentansprüche

1. Verwendung von Aziridinen der Formel (I) 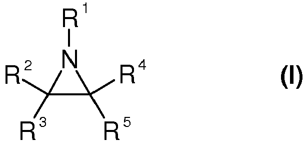 wobei
R¹ Wasserstoff, Alkyl oder Cycloalkyl, die jeweils unsubstituiert oder substituiert und/oder einfach- oder mehrfach ethylenisch ungesättigt sind, jeweils substituiertes oder unsubstituiertes Fullerenyl, Aryl, Alkoxy, Alkoxycarbonyl, Arylcarbonyl oder Alkanoyl bedeutet,
R², R³, R⁴ und R⁵ unabhängig voneinander die gleiche Bedeutung wie R¹ haben und zusätzlich unabhängig Halogen, Hydroxyl, Carboxyl, Alkylsulfonyl, Arylsulfonyl, Nitril, Isonitril bedeuten und
R² und R⁴ oder R³ und R⁵ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist zur Stabilisierung von Iodpropinylcarbamaten.

2. Zusammensetzung enthaltend
a) wenigstens ein Iodpropinylcarbamat und
b) wenigstens eine Aziridinverbindung der Formel (I) gemäß Anspruch 1.

3. Zusammensetzung nach Anspruch 2, enthaltend als Iodpropinylcarbamat, eine Verbindung ausgewählt aus der Gruppe bestehend aus 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, 3-Iod-2-propinyloxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethylcarbamat, 3-Iod-2-propinyl-n-hexylcarbamat und 3-Iod-2-propinyl-cyclohexylcarbamat.

4. Zusammensetzung nach wenigstens einem der Ansprüche 2 bis 3, enthaltend als Iodpropinylcarbamat IPBC.

5. Zusammensetzung nach wenigstens einem der Ansprüche 2 bis 4, enthaltend wenigstens eine Aziridinverbindung der Formel Formel (VI) 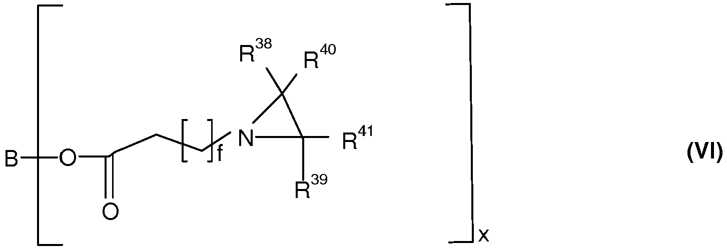 worin
B der Rest eines aliphatischen Polyols ist, das wenigstens x OH-Funktionen aufweist,
wobei x OH-Funktionen durch den Rest der obigen Klammer substituiert sind,
f für eine Zahl von 0 bis 6, steht,
x eine Zahl größer oder gleich 2 ist, insbesondere für 2 bis 100.000 steht und
R³⁸ und R³⁹ oder R⁴⁰ und R⁴¹ gemeinsam mit den Kohlenstoffatomen, an die sie gebunden sind, einen 5- bis 10 gliedrigen carbocyclischen Ring bilden, der unsubstituiert oder substituiert und/oder einfach- oder mehrfach ethylenisch ungesättigt ist.

6. Zusammensetzung nach wenigstens einem der Ansprüche 2 bis 5, enthaltend zusätzlich ein Lösungsmittel, insbesondere ein Lösungsmittel, das zu mehr als 95Gew.-% aus wenigstens einem organischen Lösungsmittel besteht.

7. Bindemittelformulierung, enthaltend
- wenigstens ein Bindemittel
- wenigstens ein Iodpropinylcarbamat und
- wenigstens eine Aziridinverbindung der Formel (I) gemäß Anspruch 1.

8. Bindemittelformulierung nach Anspruch 7, enthaltend wenigstens ein oxidativ trocknendes Bindemittel als Bindemittel.

9. Bindemittelformulierung nach wenigstens einem der Ansprüche 7 bis 8, enthaltend wenigstens ein Übergangsmetalltrockner.

10. Bindemittelformulierung nach wenigstens einem der Ansprüche 7 bis 9, enthaltend wenigstens ein polares organisches Lösungsmittel, vorzugsweise ein polares aprotisches Lösungsmittel.

11. Bindemittelformulierung nach wenigstens einem der Ansprüche 7 bis 10, enthaltend wenigstens ein Alkydharz als Bindemittel.

12. Bindemittelformulierung nach wenigstens einem der Ansprüche 7 bis 11, enthaltend 1 bis 80 Gew.-%, Alkydharzbinder
0 bis 50 Gew.-% Farbpigmente
0,01 bis 5 Gew.-% ein Iodpropinylcarbamat
0,001 bis 5 Gew.-% Aziridinverbindung der Formel (I),
2 bis 97 Gew.-% Lösungsmittel und
0,001 bis 3 Gew.-% eines Übergangsmetalltrockners.

13. Verwendung der Zusammensetzung nach Anspruch 4 zum Schutz von technischen Materialien gegen Zerstörung oder Befall durch Mikroorganismen.

14. Technische Materialien enthaltend wenigstens ein Iodpropinylcarbamat und wenigstens eine Aziridinverbindung der Formel (I) gemäß Anspruch 1.

## Claims

1. Use of aziridines of the formula (I) 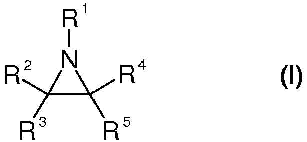 where
R¹ is hydrogen, alkyl or cycloalkyl, each of which are unsubstituted or substituted and/or mono- or polyethylenically unsaturated, or in each case substituted or unsubstituted fullerenyl, aryl, alkoxy, alkoxycarbonyl, arylcarbonyl or alkanoyl,
R², R³, R⁴ and R⁵ independently of one another have the same definition as R¹ and additionally independently are halogen, hydroxyl, carboxyl, alkylsulphonyl, arylsulphonyl, nitrile, isonitrile, and
R² and R⁴ or R³ and R⁵, together with the carbon atoms to which they are attached, form a 5-to 10-membered carbocyclic ring which is unsubstituted or substituted and/or mono- or polyethylenically unsaturated for stabilizing iodopropynyl carbamates.

2. Composition comprising
a) at least one iodopropynyl carbamate and
b) at least one aziridine compound of the formula (I) according to Claim 1.

3. Composition according to Claim 2, comprising as iodopropynyl carbamate a compound selected from the group consisting of 3-iodo-2-propynyl propylcarbamate, 3-iodo-2-propynyl butylcarbamate (IPBC), 3-iodo-2-propynyl m-chlorophenylcarbamate, 3-iodo-2-propynyl phenylcarbamate, di(3-iodo-2-propynyl) hexyldicarbamate, 3-iodo-2-propynyloxyethanol ethylcarbamate, 3-iodo-2-propynyloxyethanol phenylcarbamate, 3-iodo-2-propynyl thioxothioethylcarbamate, 3-iodo-2-propynyl carbamate (IPC), 3-bromo-2,3-diiodo-2-propenyl ethylcarbamate, 3-iodo-2-propynyl n-hexylcarbamate and 3-iodo-2-propynyl cyclohexylcarbamate.

4. Composition according to at least one of Claims 2 to 3, comprising as iodopropynyl carbamate IPBC.

5. Composition according to at least one of Claims 2 to 4, comprising at least one aziridine compound of the formula formula (VI) 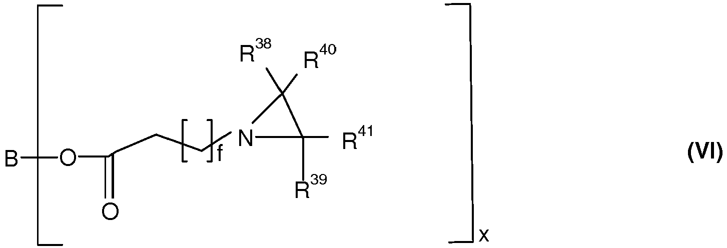 in which
B is the radical of an aliphatic polyol which contains at least x OH functions, where x OH functions are substituted by the radical of the above brackets,
f is a number from 0 to 6,
x is a number greater than or equal to 2, and more particularly is 2 to 100 000, and
R³⁸ and R³⁹ or R⁴⁰ and R⁴¹, together with the carbon atoms to which they are attached, form a 5- to 10-membered carbocyclic ring which is unsubstituted or substituted and/or mono- or polyethylenically unsaturated.

6. Composition according to at least one of Claims 2 to 5, further comprising a solvent, more particularly a solvent composed to an extent of more than 95% by weight of at least one organic solvent.

7. Binder formulation comprising
- at least one binder
- at least one iodopropynyl carbamate and
- at least one aziridine compound of the formula (I) according to Claim 1.

8. Binder formulation according to Claim 7, comprising as binder at least one oxidatively drying binder.

9. Binder formulation according to at least one of Claims 7 to 8, comprising at least one transition metal dryer.

10. Binder formulation according to at least one of Claims 7 to 9, comprising at least one polar organic solvent, preferably a polar aprotic solvent.

11. Binder formulation according to at least one of Claims 7 to 10, comprising as binder at least one alkyd resin.

12. Binder formulation according to at least one of Claims 7 to 11, comprising
1% to 80% by weight of alkyd resin binder(s),
0% to 50% by weight of colour pigments
0.01% to 5% by weight of an iodopropynyl carbamate,
0.001% to 5% by weight of aziridine compound of the formula (I),
2% to 97% by weight of solvent(s) and
0.001% to 3% by weight of a transition metal dryer.

13. Use of the composition according to Claim 4 for protecting industrial materials against destruction or infestation by microorganisms.

14. Industrial materials comprising at least one iodopropynyl carbamate and at least one aziridine compound of the formula (I) according to Claim 1.

## Revendications

1. Utilisation d'aziridines de formule (I) 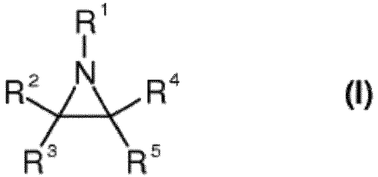 dans laquelle
R¹ représente un atome d'hydrogène, un groupe alkyle ou un groupe cycloalkyle, qui sont chacun substitués ou non substitués et/ou présentent chacun une ou plusieurs insaturation(s) éthylénique(s), un groupe fullerényle, aryle, alcoxy, alcoxycarbonyle, arylcarbonyle ou alcanoyle, chacun substitué ou non substitué,
R², R³, R⁴ et R⁵ ont indépendamment les uns des autres la même signification que R¹ et en outre représentent indépendamment un atome d'halogène, un groupe hydroxy, carboxy, alkylsulfonyle, arylsulfonyle, nitrile, isonitrile et
R² et R⁴ ou R³ et R⁵, ensemble avec les atomes de carbone auxquels ils sont liés, forment un cycle carbocyclique à 5 à 10 chaînons, qui est substitué ou non substitué et/ou présente une ou plusieurs insaturation(s) éthylénique(s),
pour la stabilisation de carbamates d'iodopropynyle.

2. Composition contenant
a) au moins un carbamate d'iodopropynyle et
b) au moins un composé aziridine de formule (I) selon la revendication 1.

3. Composition selon la revendication 2, contenant en tant que carbamate d'iodopropynyle un composé choisi dans le groupe constitué par le propylcarbamate de 3-iodo-2-propynyle, le butylcarbamate de 3-iodo-2-propynyle (IPBC), le m-chlorophénylcarbamate de 3-iodo-2-propynyle, le phénylcarbamate de 3-iodo-2-propynyle, le dicarbamate de di-(3-iodo-2-propynyl)hexyle, l'éthylcarbamate de 3-iodo-2-propynyloxyéthanol, le phénylcarbamate de 3-iodo-2-propynyl-oxyéthanol, le thioxo-thioéthylcarbamate de 3-iodo-2-propynyle, le carbamate de 3-iodo-2-propynyle (IPC), l'éthylcarbamate de 3-bromo-2,3-diiodo-2-propényle, le n-hexylcarbamate de 3-iodo-2-propynyle et le cyclohexylcarbamate de 3-iodo-2-propynyle.

4. Composition selon au moins l'une quelconque des revendications 2 et 3, contenant de l'IPBC en tant que carbamate d'iodopropynyle.

5. Composition selon au moins l'une quelconque des revendications 2 à 4, contenant au moins un composé aziridine de formule (VI) 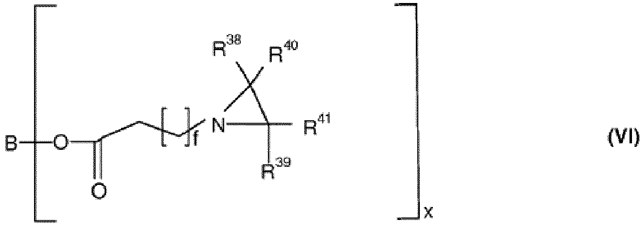 dans laquelle
B représente le reste d'un polyol aliphatique qui comporte au moins x fonctions OH, les x fonctions OH étant substituées par le radical figurant entre les crochets ci-dessus,
f représente un nombre valant de 0 à 6,
x est un nombre supérieur ou égal à 2, en particulier représente 2 à 100 000 et
R³⁸ et R³⁹ ou R⁴⁰ et R⁴¹ forment ensemble, avec les atomes de carbone auxquels ils sont liés, un cycle carbocyclique à 5 à 10 chaînons, qui est substitué ou non substitué et/ou présente une ou plusieurs insaturation(s) éthylénique(s).

6. Composition selon au moins l'une quelconque des revendications 2 à 5, contenant en outre un solvant, en particulier un solvant qui consiste à raison de plus de 95 % en poids en au moins un solvant organique.

7. Composition de liant, contenant
- au moins un liant
- au moins un carbamate d'iodopropynyle et
- au moins un composé aziridine de formule (I) selon la revendication 1.

8. Composition de liant selon la revendication 7, contenant en tant que liant au moins un liant à séchage oxydatif.

9. Composition de liant selon au moins l'une quelconque des revendications 7 et 8, contenant au moins un agent de séchage à base de métal de transition.

10. Composition de liant selon au moins l'une quelconque des revendications 7 à 9, contenant au moins un solvant organique polaire, de préférence un solvant aprotique polaire.

11. Composition de liant selon au moins l'une quelconque des revendications 7 à 10, contenant au moins une résine alkyde en tant que liant.

12. Composition de liant selon au moins l'une quelconque des revendications 7 à 11, contenant 1 à 80 % en poids de liant de type résine alkyde,
0 à 50 % en poids de pigments colorés
0,01 à 5 % en poids d'un carbamate d'iodopropynyle
0,001 à 5 % en poids de composé aziridine de formule (I),
2 à 97 % en poids de solvant et
0,001 à 3 % en poids d'un agent de séchage à base de métal de transition.

13. Utilisation de la composition selon la revendication 4 pour la protection de matériaux techniques contre la destruction ou l'attaque par des micro-organismes.

14. Matériaux techniques contenant au moins un carbamate d'iodopropynyle et au moins un composé aziridine de formule (I) selon la revendication 1.
